Europäisches Patentamt

European Patent Office

Office européen des brevets

(11) Publication number: **0 067 667**
**B1**

(12) EUROPEAN PATENT SPECIFICATION

(45) Date of publication of patent specification: **17.08.88**

(51) Int. Cl.⁴: **G 06 F 9/22**

(21) Application number: **82302998.8**

(22) Date of filing: **10.06.82**

(54) Data processing system.

(30) Priority: **11.06.81 US 272507**
**11.06.81 US 272777**
**11.06.81 US 272541**

(43) Date of publication of application:
**22.12.82 Bulletin 82/51**

(45) Publication of the grant of the patent:
**17.08.88 Bulletin 88/33**

(84) Designated Contracting States:
**AT BE CH DE FR GB IT LI LU NL SE**

(56) References cited:
**FR-A-2 253 435**

**MICROS, MINIS AND MAXIS, Technology
thrust vs user requirement, 6th-9th September
1977, Fall meeting, Digest of papers from
COMPCON, pages 144-147, IEEE, Computer
Society International Conference, Conf. 15,
IEEE, New York, USA; C.V.W. ARMSTRONG:
"Multimicroprocessor architectures and the
use of multi-level encoding in microinstruction
formats"**

(73) Proprietor: **DATA GENERAL CORPORATION
Route 9
Westboro Massachusetts 01581 (US)**

(72) Inventor: **Beauchamp, Robert William
16 Shadowbrook Lane
Milford Massachusetts 01757 (US)**
Inventor: **Blau, Jonathan Seth
135 Riviera Drive Apt. 341
Los Gatos California 95030 (US)**
Inventor: **Stein, James B.
25-10 Royal Crest Lane
Marlboro Massachusetts 01752 (US)**

(74) Representative: **Pears, David Ashley et al
REDDIE & GROSE 16 Theobalds Road
London WC1X 8PL (GB)**

Courier Press, Leamington Spa, England.

# 0 067 667

**Description**

This invention relates to data processing systems and is concerned more particularly with the means used to perform arithmetic computations.

Data processing systems utilize arithmetic units for performing fixed or floating point calculations. One such system, for example, is utilized in a 32-bit processing system made and sold by Data General Corporation of Westboro, Massachusetts under the Registered Trade Mark ECLIPSE MV/8000. Such system utilizes an arithmetic logic unit (ALU) which can perform both fixed point calculations and floating point calculations.

In performing floating point calculations, the arithmetic logic unit of such system can be operated to produce either "single precision" accuracy wherein the floating point mantissa result comprises 24 bits (the remaining 8 bits being designated as "guard bits" for use in rounding operations) or "double precision" accuracy in which the calculation is effectively a 64-bit operation wherein the floating point mantissa result comprises 56 bits (the remaining 8 bits being used for rounding in the same manner as in single precision operations). In the present ECLIPSE MV/8000 system, double precision operations are performed by the arithmetic logic unit as two sequential 32-bit operations so that the overall time required for double precision is substantially greater than that required for single precision operation.

It is desirable to be able to perform the double precision operation in substantially less time without greatly increasing the overall complexity or cost of the system in this regard.

An appropriate technique for doing so which has been suggested involves the performance of floating point operations by a floating point arithmetic unit which is separate from the arithmetic unit which performs fixed point operations. The floating point unit can be capable of performing its operation on 32-bit or 64-bit words to achieve both single and double precision operations. Thus, such a system would utilize both an arithmetic logic unit (ALU) and a floating point unit (FPU), each having its own control store for storing its own microinstructions (i.e., microcode) which are used in performing the separate types of arithmetic calculations involved. Accordingly, the ALU control store would provide microcode for performing 32-bit fixed point operations while the FPU control store would provide microcode for performing both 32-bit and 64-bit floating point operations. The time required to perform a complete double precision floating point operation would be reduced over that required to perform such double precision floating point operations using only a single arithmetic logic unit which can operate only on 32-bit words at a time. Such an approach, however, requires the provision of an additional different control store with entirely different microcode for controlling the operation of the FPU independently and separately from the control store and microcode operation of the ALU.

Alternatively, the applicants considered using a single control store, which store, however, is considerably enlarged in comparison with that previously required when using a single arithmetic logic unit so as to provide completely different and separate sets of control fields for controlling the operation of the ALU and for controlling the operation of the FPU. The use of such an enlarged control store is required in order to accommodate a sufficient number of control fields to assure that such units are independently and effectively separately controlled.

A system disclosing a data processing system handling both fixed and floating point computation operation in which an arithmetic unit for providing fixed point calculations and a separate floating point unit are controlled by common control unit is disclosed in a paper entitled "multi-microprocessor architectures and the use of multi-level encoding in microinstruction formats" published in MICROS, MINIS and MAXIS technology thrust vs user requirements a digest of papers from the fall meeting of COMPCON IEEE Computer Society international conference held 6—9 September 1977.

FR 2253435 discloses a system in which micro-code from a common control is supplied to an arithmetic logic unit or ALU emulator. Which unit actually operates is controlled by the state of a flip-flop so that at a given time only one of the units responds to the micro-code.

It is desirable, however, to be able to provide the above desired operation without the need for two separate control stores or for such an enlarged control store. With a view to meeting this need, the present invention provides a data processing system as defined in claim 1 below.

Thus, in practising the invention, fixed point operations, as well as single and double precision floating point operations, can be achieved utilising an ALU board and a separate FPU board, both of which are controlled through the use of a single, common control store having common control fields. In effect, then, control of both boards is achieved using substantially the same overall microcode, except for the microcode which relates to floating point operations. The general configuration of the FPU board is substantially similar to the general configuration of the ALU board and both boards share common microinstruction fields for the control of their operations, the FPU board requiring the use of only two additional fields for controlling destination operations and for controlling single and double precision floating point operations. Such additional 3-bit and 2-bit fields, respectively, can be readily accommodated in the single previously used control store without enlargement thereof. The remaining microcode fields are common to both ALU and FPU boards, the FPU board utilizing such microcode when a floating point operation is required (the ALU board being effectively disabled) and the ALU board using such microcode when non-floating point operation is required (the FPU board being effectively disabled).

A double precision operation can be performed at a speed which is substantially greater than that

2

required when using the conventional 32-bit single ALU board operation mentioned above. Further, since substantially the same microcode is used for both ALU and FPU operations, it is not necessary to rewrite, or to add to, the previously used microcode for non-floating point operations except for minimal control field additions needed to distinguish between ALU or FPU operations, such operations otherwise using the same control fields as used for the previous ALU operation. Because the ALU board and the FPU board share the same fields, except for the added destination and single/double precision fields needed for the FPU, the complexity and costs of the system are reduced over systems which require two complete separate control stores or two completely separate sets of control fields of a single control store.

Moreover, the system is readily adapted to implementing an improved technique for providing floating point arithmetic rounding operations in either single or double precision modes, and the invention comprises also a data processing system as defined in claim 11.

The invention will be described in more detail, by way of example, with reference to the accompanying drawings, in which:

Figs. 1 and 2 make up a block diagram of an arithmetic logic unit as used in the prior ECLIPSE MV/8000 unit;

Fig. 3 and 4 make up a block diagram of a floating point unit in accordance with the invention; and

Figs. 5—36 depict specific logic diagrams for implementing the block diagram of Fig. 2 of the floating point unit of the invention.

At the end of this description there appear two tables, namely:

TABLE 1 shows a chart defining the control store mode (CSM) and extension (EXT) fields as used in floating point microinstructions in accordance with the invention; and

TABLE 2 shows a chart defining the comparable control store mode (CSM) fields of the previously used MV/8000 system.

When using a floating point unit for providing either single or double precision operation and calculating the mantissa value, the 64-bit word which results comprises the following portions:

```
CRY∅                        CRY24                    CRY56 CRY1N
←─┐ ─ ─ ─ ─ ─ ─ ─ ─ ─ ←─┐ ─ ─ ─ ─ ─ ─ ─ ─ ─ ─ ─ ─ ←─┐ ─ ─ ←─┐
 ┌───┬───┬───┬───┬───┬───┬───┬───┬───┬───┬───┬───┬───┬───┬───┐
 │   │   │   │   │   │   │   │   │   │   │   │   │   │   │   │
 └───┴───┴───┴───┴───┴───┴───┴───┴───┴───┴───┴───┴───┴───┴───┘
 ∅   4   8   12  16  20  24  28  32  36  40  44  48  52  56    60

 ←───── Upper 6 Slices ─────→│←───── Middle 8 Slices ─────→│←Lower 2→
                                                              Slices

 ←Single Precision Result→│←Guard→│
                           Bits

 ←─────────────── Double Precision Result ───────────────→│←Guard→
                                                            Bits
```

During a single precision operation only 32 bits (bits 0—31) of the 64-bit words are used (bits 32—63 are "zero). The floating point mantissa result comprises bits 0—23 while bits 24—31 are designated as "guard" bits which are utilized in a rounding operation, as discussed in more detail below. When providing double precision operation the mantissa floating point result comprises bits 0—55, with bits 56—63 operating as the "guard" bits thereof.

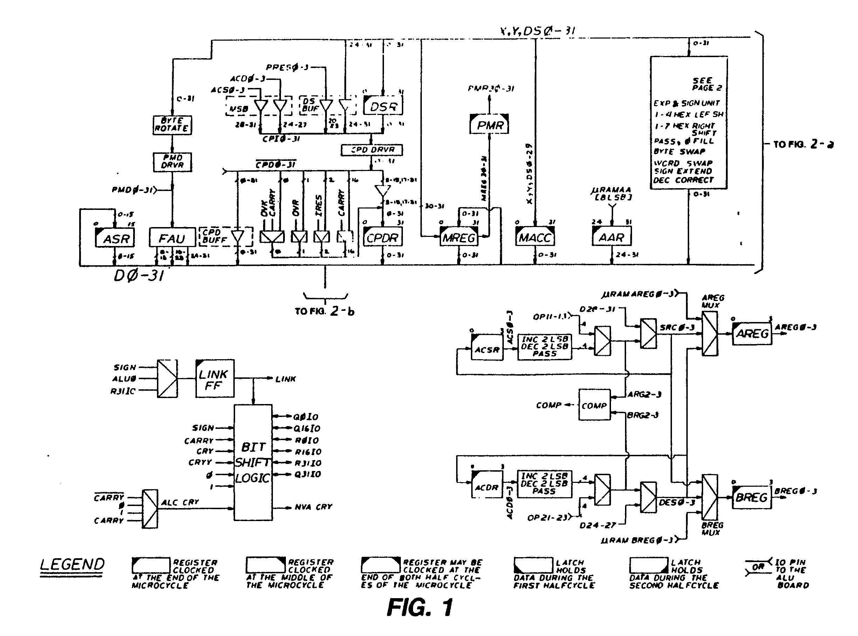

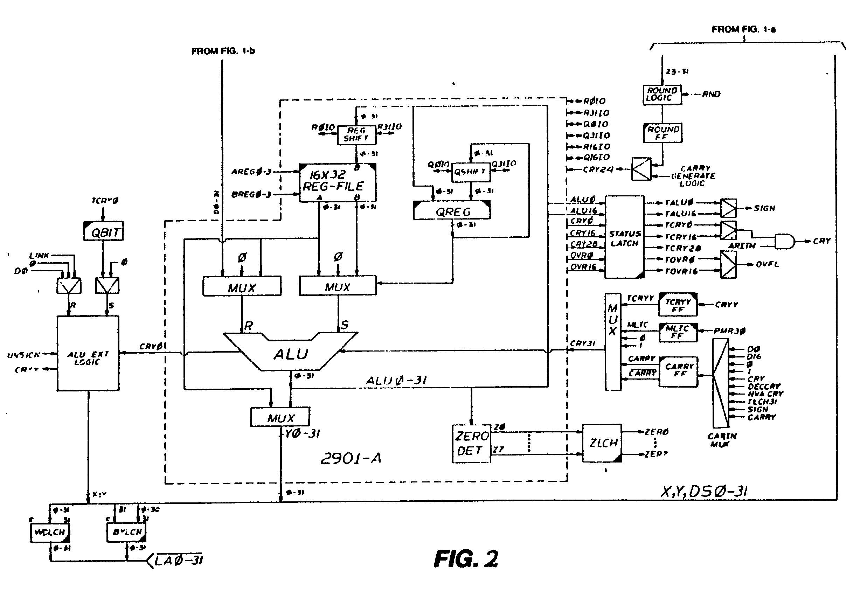

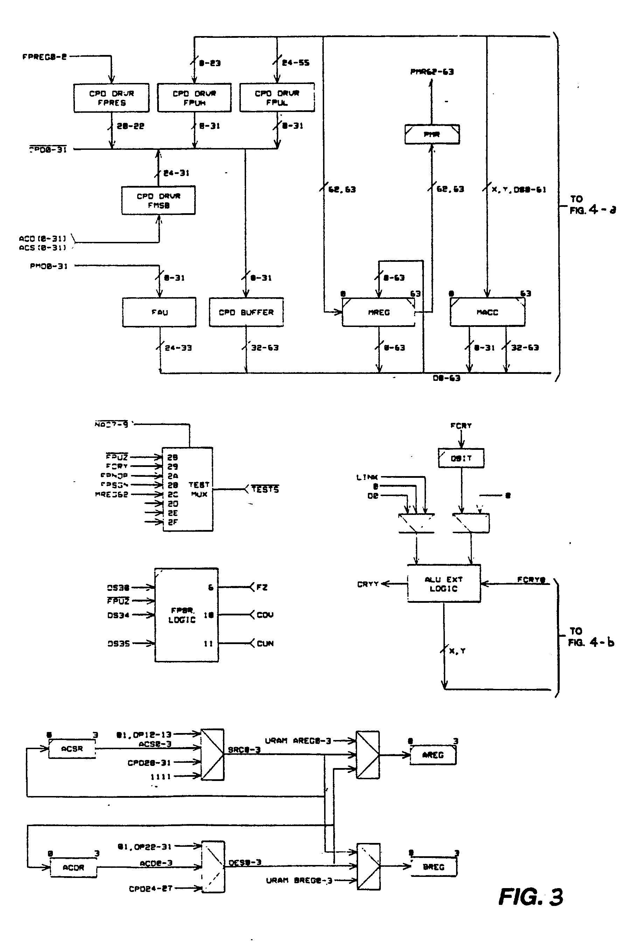

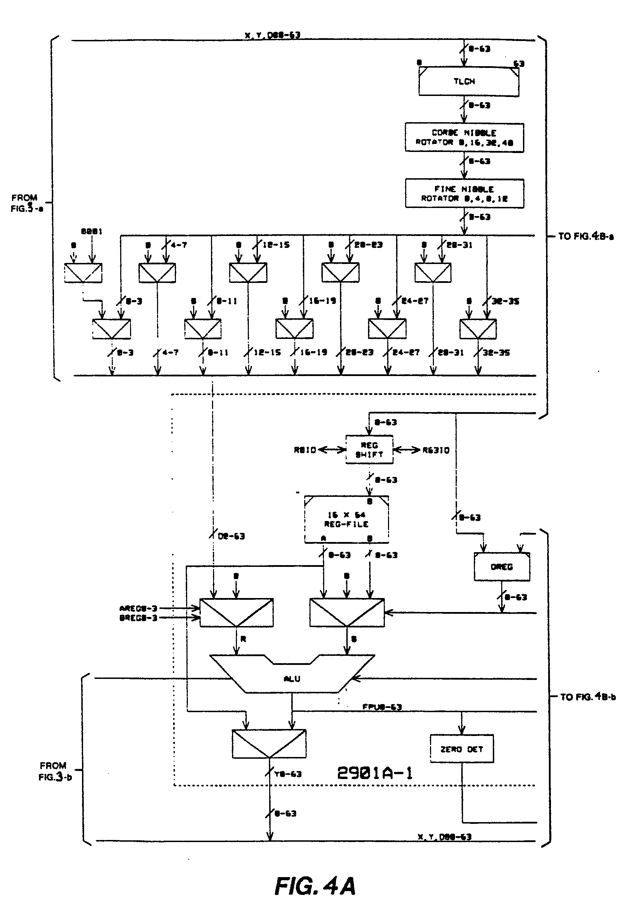

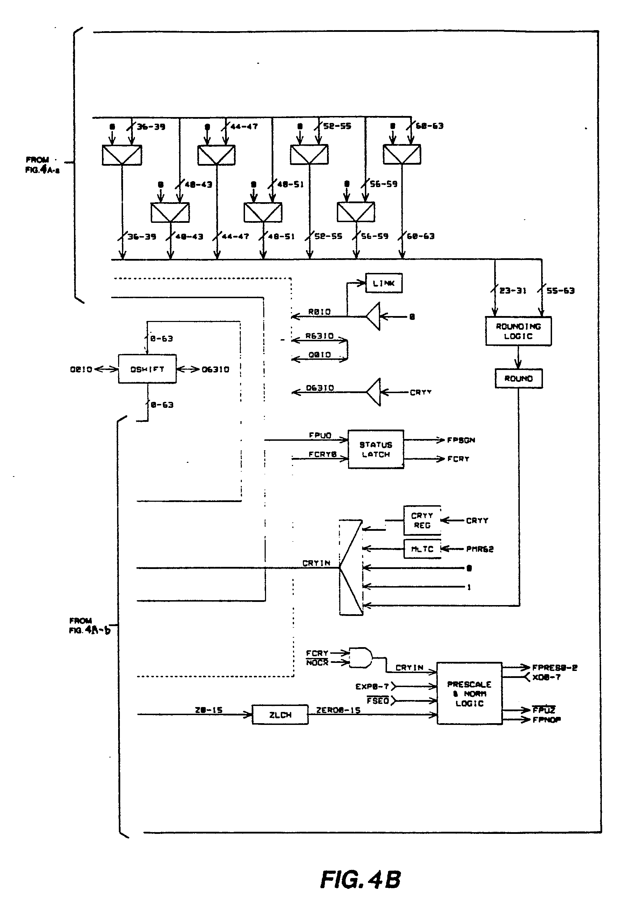

In performing both fixed and floating point arithmetic operations in the aforesaid ECLIPSE MV/8000 system, a single arithmetic logic unit (ALU) as shown in broad block diagram form in Figs. 1 and 2 is used. The operation thereof is known in the art with respect to the currently available MV/8000 system. In accordance with the invention, a separate floating point unit (FPU) is used for performing floating point calculations, such unit having the broad block diagram configuration shown in Figs. 3 and 4. As can be seen therein, the overall operational block diagram of the FPU is substantially similar to that of the previously utilized ALU.

Control of the operation of the ALU in the previous MV/8000 system is determined in accordance with specifically devised microcode, a typical 80-bit microinstruction format as used therein, for example, being described below:

| NAC 20 | AREGS 4 | BREGS 4 | CSM 4 | D1ST 2 | D2ND 4 | SHFT 4 | ALUS 3 | ALUOP 3 |
|---|---|---|---|---|---|---|---|---|
| 0 | 20 | 24 | 28 | 32 | 34 | 38 | 42 | 45    47 |

| ALUD 3 | CRYINS 1 | RAND 10 | LAC 2 | CPDS 5 | MEMS 3 | MEMC 2 | FPUD 3 | EXT 2 | UPAR 1 |
|---|---|---|---|---|---|---|---|---|---|
| 48 | 51 | 52 | 62 | 64 | 69 | 72 | 74 | 77 | 79 |

In this format bits 74—78 were unused in the MV/8000 system and the microcode field designated as the CSM (control store mode) controlled operations of the ALU for both fixed and floating point mode. In accordance with the invention, control of both the separate ALU and the FPU boards is achieved through the use of essentially the same microcode control store and microinstruction format wherein the five previously unused bits 74—78 are used to provide two additional fields for controlling the operation of the floating point unit destination registers (the FPUD field bits 74—76) and for controlling operation for either single or double precision results (the EXT field bits 77 and 78), as described in more detail below.

Thus, in the invention the microinstruction fields which control the operation of the floating point unit are the control store mode (CSM) field bits 28—31, the 3-bit floating point unit destination FPUD) field bits 74—76, and the 2-bit extension (EXT) field, bits 77 and 78. As in the previous ECLIPSE MV/8000 unit, the operations for both the arithmetic logic unit and the floating point unit are cycled twice for each microinstruction (a first half-cycle and a second half-cycle) and the CSM, FPUD and EXT fields define the sources of control during each of the half-cycles.

A summary of the control store mode field and the extension field operations is shown in TABLE 1 for the various operations which are performed. As in the MV/8000 the floating point operation is performed in 4-bit slices, the overall 64-bit data words utilized comprising sixteen 4-bit slices, the single precision floating point result comprising six 4-bit slices (the "upper" six slices) and the double precision 56-bit result comprising fourteen 4-bit slices (the "upper" six slices and the "middle" eight slices) and the guard bits for use in the double precision mode comprising two 4-bit slices (the "lower" two slices). In the first twelve mathematical operations performed, such operations can be either single or double precision operations as determined by the extension (EXT) field bits.

In the control store mode and extension fields described in TABLE 1, the FMATH, FFIXP, FGEN, FATU, BOUT, QDEC, QINC and QADD modes use both half-cycles 1 and 2 for their normal operations (e.g., A op B → B). The remaining modes perform two FPU operations. Most tests, and TLCH (nibble shift input) look at only first half data during these modes. The SMATH, SFIXP, SGEN and SATU modes perform an operation during the first half-cycle but utilize the data bus (DBUS) during the second half-cycle. The NORM and PRESC modes are used to normalize and prescale the floating point operands, respectively, while the MPY mode implements a double cycle 2-bit Booth's multiply algorithm and the DIV mode implements a double cycle non-restoring divide operation, the latter operations both being conventional and well known in the art.

The first twelve mathematical modes can be used for either double or single precision accuracy and such operation is determined by the EXT field as shown in TABLE 1. Thus, for a double precision operation, where all sixteen 4-bit slices are utilized, the micro-order from the appropriate field of the specified microinstruction (ul) of the DBUS use controls all sixteen slices. This is designated in TABLE 1 by the presence of ul16 or the designations DZ16 and OR16. In the appropriate ALU and FPU fields, i.e., the ALUS (ALU source), the ALUOP (ALU operation field and the FPUD (FPU destination) field. The designation "#" during the first half cycle for the FPUD field merely indicates that no FPUD clocking takes placed (i.e., there is no FPU destination operation for such mode during the first half-cycle) and the designation "@16" indicates that the micro-order will defer to a pre-decoded or "forced" value.

For a single precision operation the lower ten 4-bit slices (bits 24—63) are zero since only bits 0—23 are used. In the particular operation of the floating point unit an "AND" operation in which one of the operands is zero at each bit slice provides for a propagation of an input carry (CRY) bit through each bit slice to the output carry bit so that the FPU "CRYIN" is propagated throughout the lower ten 4-bit slices for single precision operation. The basis for such operation of the FPU computation circuit in this regard is described in more detail below with respect to the description of rounding techniques discussed at a later point herein. While zeros are present in the lower ten 4-bit slices the micro-order from the appropriate field of the specified microinstruction (ul) controls the upper six 4-bit slices. For example, in the first half-cycle for all of the four Fxxx modes shown in TABLE 1, single precision operation (EXT field 2) is designated by the legends "ul6/DZ10" (indicating the operands of the upper six slices are under microinstruction control and the operands of the lower ten slices are the DBUS and zero) for the ALUS field and "u16/AND10" (indicating the operands of the upper six slices are under microinstruction control and each of the lower ten slices receive an AND operation) for the ALUOP field. The FPUD field is not used in the first half-cycle, while such field is under microinstruction control during the second half-cycle.

The Control Store Mode for controlling operation of the ALU utilizes substantially the same microcode, as shown by the CSM characteristics depicted in TABLE 2 (which is also the control store mode set up to control operation in the previously designed ECLIPSE MV/8000 system). As can be seen therein, where there is no separately defined single or double precision operation for the ALU, effectively the same CSM operations are performed as for the FPU operation and no EXT field is required. Thus, for ALU operation control field bits 74—78 of the above microinstruction are not utilized (no FPUD field and no EXT field controls are required). In each case, for both ALU and FPU operations, the ALUS and the ALUOP field values represent exactly the same operations as shown below.

The ALU is cycled twice for each micro-instruction. The CSM field defines the sources of control during the two half cycles.

The Fxxx modes use both cycles for normal A + B → B operation. The remaining modes perform 2 ALU operations. Most tests, LA, and TLCH (nibble shift input) look at only first half data during these modes. Sxxx modes are useful for setting up tests or memory starts with the second half used for reading memory, 0—D5, or the nibble shifter. BOUT is similar but allows memory write in the second half. The Qxxx modes allow two registers to be loaded in one cycle. The Q register is generally used to contain an address which will be incremented or decremented before each memory start. MPY and DIV implement double cycles of the multiply and divide algorithms.

| ALUS FIELD (R,S) | | | ALUOP FIELD | | |
|---|---|---|---|---|---|
| AQ | O | | ADD | O | (R + S) |
| AB | 1 | | SUB | 1 | (S - R) |
| ZQ | 2 | | RSB | 2 | (R - S) |
| ZB | 3 | | OR | 3 | (R or S) |
| ZA | 4 | | AND | 4 | (R * S) |
| DA | 5 | | ANC | 5 | (R' *S) |
| DQ | 6 | | XQR | 6 | (R xor S) |
| DZ | 7 | | XNR | 7 | (R xor S)' |

For the ALU operations the ALUD field and for FPU operations the FPUD field are also shown below.

ALUD FIELD

| Mnem | Value | Description |
|---|---|---|
| NLD | O | No load; Y< O-31> = ALU < O-31> |
| QREG | 1 | Load QREG only; Y < O-31> = ALU <O-31> |
| BREG | 2 | Load BREG only; Y < O-31> = ALU <O-31> |
| AOUT | 3 | Load BREG only; Y < O-31> = AREG < O-31> |
| RSHB | 4 | Load BREG with ALU shifted right one bit; LINK register := ALU31; Y < O-31> = ALU< O-31> |
| RSQB | 5 | Load BREG with ALU shifted right one bit; Shift QREG right; Y< O-31> = ALU <O-31 > LINK register := ALU 31 |
| LSHB | 6 | Load BREG with ALU shifted left one bit; Y < O-31> = ALU< O-31 > LINK gets ALU16, ALUO for FLAGO = 0,1 respectively. |
| LSQB | 7 | Load BREG with ALU shifted left one bit; Shift QREG left; Y < O-31> = ALU< O-31> LINK gets ALU16, ALUO for FLAGO = 0,1 respectively. |

0 067 667

FPUD FIELD

| Mnem | Value | Description |
|---|---|---|
| NLD | 0 | No load; Y < 0–63> = FPU < 0–63 > |
| QREG | 1 | Load QREG only; Y< 0–63> = FPU < 0–63 > |
| BREG | 2 | Load BREG only: Y< 0–63> = FPU < 0–63 > |
| AOUT | 3 | Load BREG only; Y< 0–63> = AREG <0–63 > |
| RSHB | 4 | Load BREG with FPU shifted right one bit;<br>BREG < 0–63 > := 0, FPU < 0–62 ><br>LINK := 0 |
| RSQB | 5 | Load BREG, QREG with FPU, QREG shifted right one bit;<br>BREG < 0–63 > :=0, FPU< 0–62 ><br>QREG< 0–63 > :=FPU63, QREG < 0–62><br>LINK := 0 |
| LSHB | 6 | Load BREG with FPU shifted left one bit;<br>BREG < 0–63 > := FPU <1–63 >, QREG0<br>LINK := FPU0 |
| LSQB | 7 | Load BREG, QREG with FPU, QREG shifted left one bit;<br>BREG < 0–63 > := FPU <1–63 > QREG0<br>QREG < 0–63 > := QREG <1–62> ,CRYY<br>LINK := FPU0 |

In each case (for the ALUD field and the FPUD field) a zero value is a no load operation. Thus, when the FPU board is being utilized for a floating point operation by the system, the ALUD field has a zero value so that no ALU calculations can be loaded into any destination register, while the FPUD field assumes a value which identifies an appropriate destination register into which a floating point answer can be loaded in accordance with the FPUD field above. However, if data is being transferred between the ALU and the FPU, the microcode can be written to allow loading of a destination register on each board, according to the algorithm appropriate for the instruction being implemented.

In the same manner, when the ALU board is being utilized for a fixed point operation by the system, the FPUD field has a zero value so that no FPU calculations can be loaded into any destination register, while the ALUD field assumes a value which identifies an appropriate register into which an ALU result can be loaded in accordance with the ALUD field above.

Accordingly, substantially the same microcode is used for non-floating point operations. Floating point microcode is rewritten to control the FPU maintaining identical algorithms so that results with ALU only or ALU and FPU are the same. This requires an additional 2-bit field (the EXT field) in order to provide for suitable single or double precision floating point operation and an additional 3-bit field (the FPUD field) in order to identify FPU destination operations. Because the same microcode is used for each board, only a single microcontrol store is needed for storing the microinstructions required for controlling the operation of both boards. For double precision operation, the FPU board operates on a 64-bit word and, therefore, the overall double precision floating point calculation can be performed in less time than was required for the previous MV/8000 operation when the ALU board was used to provide both floating point single and a double precision calculations but could only do so by operating on 32-bit words at one time. However, the results produced are identical.

In addition to providing a separate board for performing single and double precision floating point computations, as discussed above, the floating point unit also is designed so as to provide "rounding" of the single or double precision floating point mantissa results in a unique manner as described below. As is well known, a conventional floating point mantissa calculation for addition or subtraction can occur in four cycles, as set forth below:

1. A comparison of the floating point operands is made to determine which is larger
2. The smaller operand is pre-scaled so as to align its radix point
3. The floating point operation is performed and normalized so as to produce an unrounded result
4. The unrounded result is rounded and the rounded result is normalized

In a floating point mantissa operation a round bit can be appropriately added into the least significant bit of the floating point result (e.g., bit 23 of the single precision operation or bit 55 of a double precision operation). Techniques for performing such rounding operation are discussed in our copending European Patent Application EP—A—0 064 826. As discussed therein the calculation is performed in 4-bit slices with

6

appropriate "carry" bits for each slice being effectively inserted into the next higher adjacent slice, as shown below, (CRY$\emptyset$ is the carry bit for the overall result). In an actual circuit implementation, for example, carry look-ahead circuits can be used to supply the carry-in bits to each slice.

CRY$\emptyset$ CRY4 CRY8 CRY12 CRY16 CRY20 CRY24          CRY52 CRY56 CRY60 CRYIN

$\emptyset$     3 4   7 8 11 12 15 16 19 20 23          52   55 56   59 60     63

The floating point computation can be performed by using a bit-slice integrated circuit which is available under the designation 2901 made by several manufacturers (e.g., IDM 2901A—1 IC ship made by National Semiconductor Corporation of Santa Clara, California). An "AND" operation (for a 4-bit slice) performed by such well-known circuit can be described as follows. Let the bits of the 4-bit slice operands be designated as $R_0$, $R_1$, $R_2$, $R_3$ and $S_0$, $S_1$, $S_2$ and $S_3$, respectively. For such AND operation, the propagate ($\overline{P}$) output is "low" and the generate ($\overline{G}$) output is defined by the Boolean equation:

$$\overline{G} = \overline{R_0 S_0 + R_1 S_1 + R_2 S_2 + R_3 S_3}$$

and the carry out (CRYOUT) output is defined by the Boolean equation:

$$CRYOUT = CRYIN + R_0 S_0 + R_1 S_1 + R_2 S_2 + R_3 S_3$$

The rounding operation to be described in accordance with the invention herein makes use of the above-described operation of the 2901 IC circuit in providing a rounding technique which avoids the extra time normally required in conventional rounding techniques which effectively require a multiplexing operation when inserting the round bit at the proper slice (as discussed in the aforesaid co-pending application).

Thus, the invention recognizes that in the above operation of the 2901 unit, if one of the operands is zero and the unit is performing an AND operation the carry in bit is propagated through the slice as the carry out bit so that

$$CRYOUT = CRYIN$$
$$P = 1 \ (\overline{P} \text{ is low})$$
$$G = \emptyset \ (\overline{G} \text{ is high})$$

That is, whatever is inserted as a CRYIN bit to the 4-bit slice effectively from the next lower adjacent 4-bit slice is propagated directly through the slice and is provided as the CRYOUT bit thereof. In an actual circuit implementation, for example, this propagation can be accomplished by carry look-ahead circuits. Carry look-ahead circuits will propagate a carry (P = 1) bit, but not generate one (G = $\emptyset$).

Therefore, in order to add the round bit into the appropriate bit position, bit 23 for a single precision mantissa computation and bit 55 for a double precision mantissa computation, the round bit (suitably calculated as described, for example, in the aforementioned copending application) can be inserted at bit 63 (the least significant bit) as the CRYIN bit of the lower 4-bit slice.

For a single precision mode for each of the middle eight 4-bit slices (bits 24—55) and the lower two 4-bit slices (bits 56—63), one of the operands is set to zero and each is controlled to perform an AND operation so that whatever is inserted as a CRYIN bit at bit 63 is propagated effectively through each of such slices as a CRYOUT bit.

Accordingly, if the round bit is added as the "carry in" bit CRYIN, such round bit is propagated effectively through the lower two and the middle eight 4-bit slices so as to be added as the carry in bit CRY24 at bit 23 of 4-bit slice 20—23 (the lowest 4-bit slice of the unrounded result) so that the rounding operation is performed without the need to utilize an effective multiplexing operation at bit 23.

In the same manner, for a double precision floating point mantissa computation, the lower two slices (bits 56—63) are arranged during the rounding cycle to have one of their operands set to zero and are controlled to perform AND operations. A round bit inserted as the CRYIN bit at bit 63 is then effectively propagated through the lower two slices and inserted as the carry in bit CRY56 (the round bit) at bit 55 of the lower 4-bit slice (bits 52—55) of the unrounded result to complete the rounding of the final 56-bit floating point mantissa result.

In the same manner, during non-rounding cycles in a single precision operation, the CRYIN bit set by microcode is effectively propagated to bit 23 as described above, since according to TABLE 1 the lower ten slices have one of their operands set to zero and are controlled to perform AND operations.

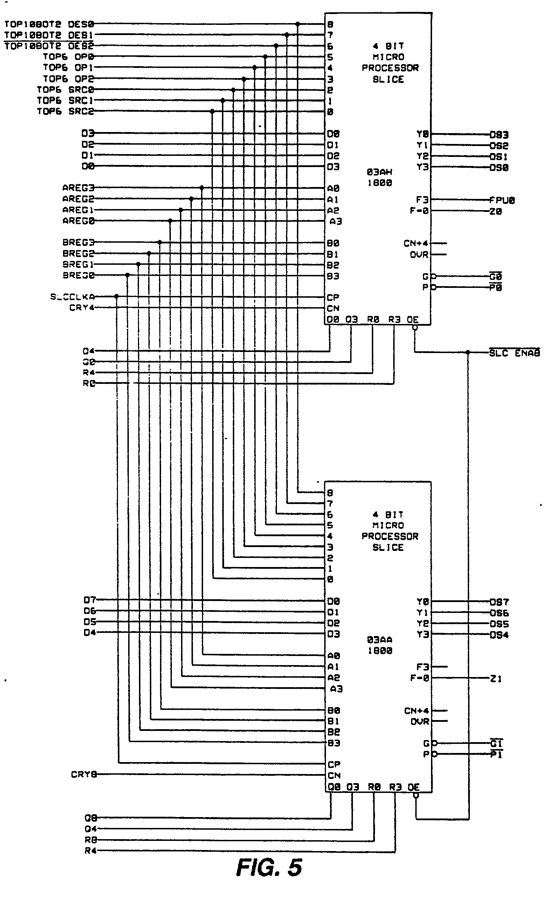

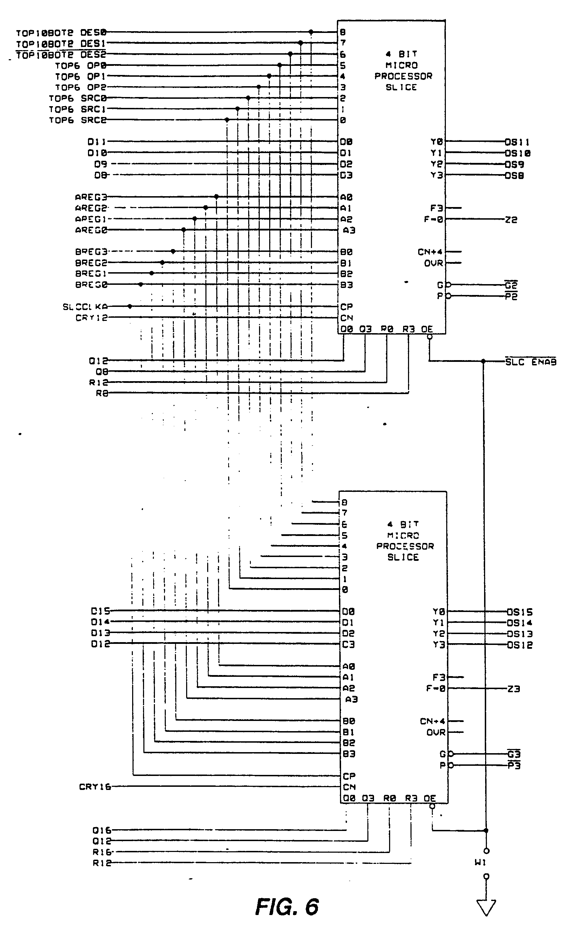

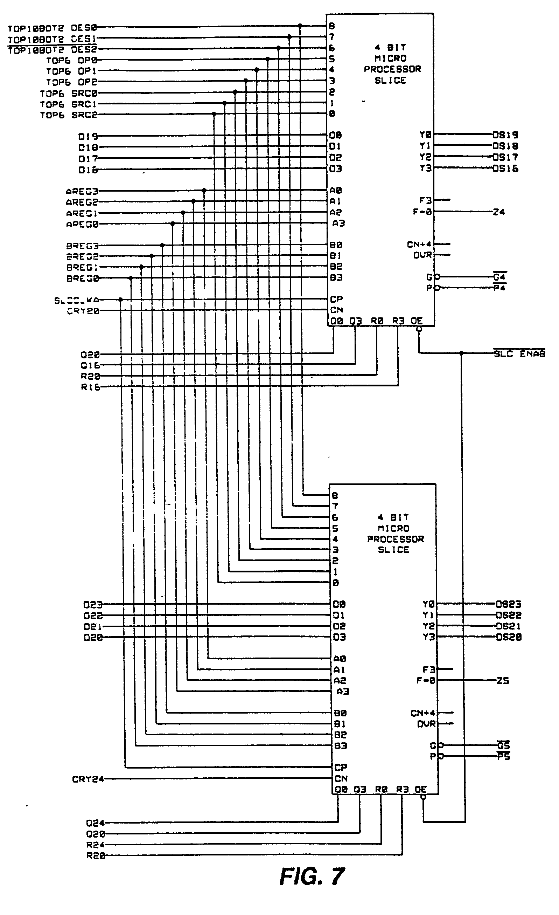

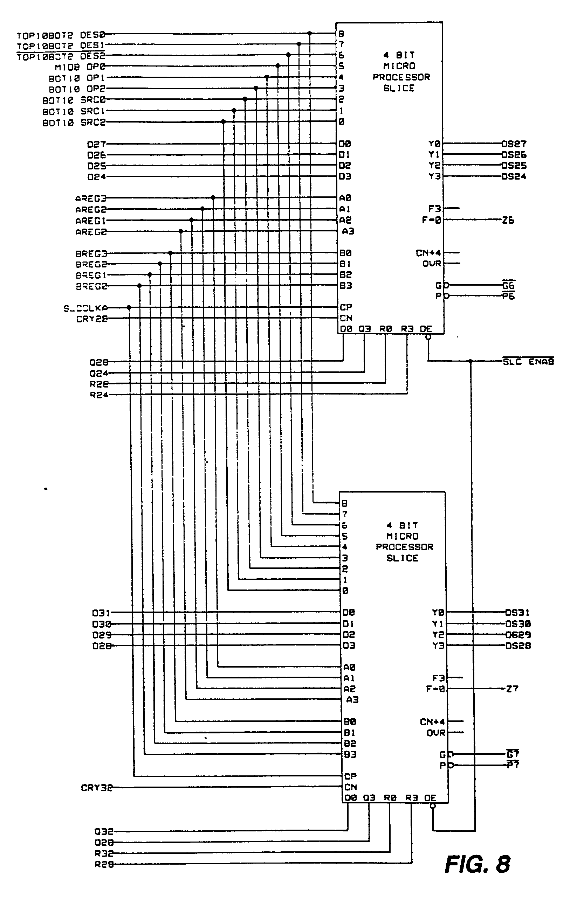

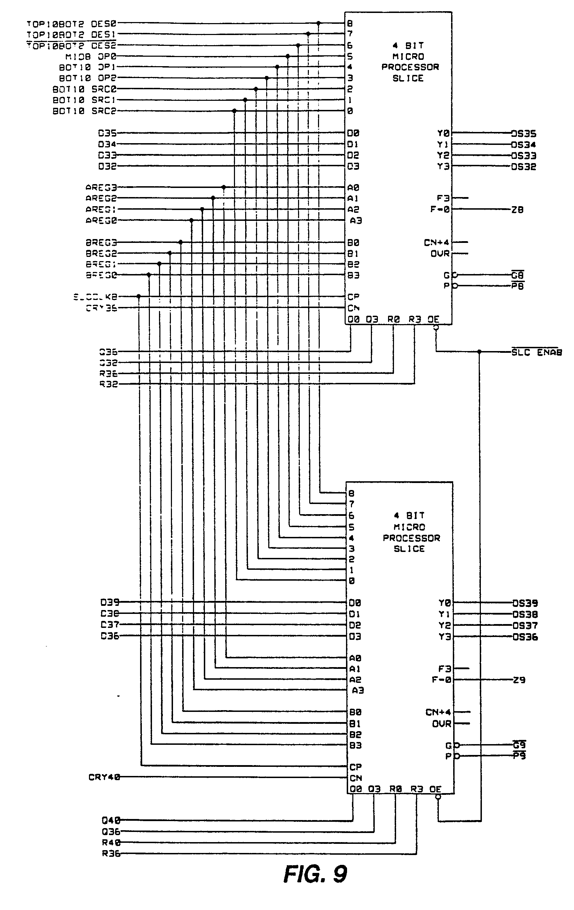

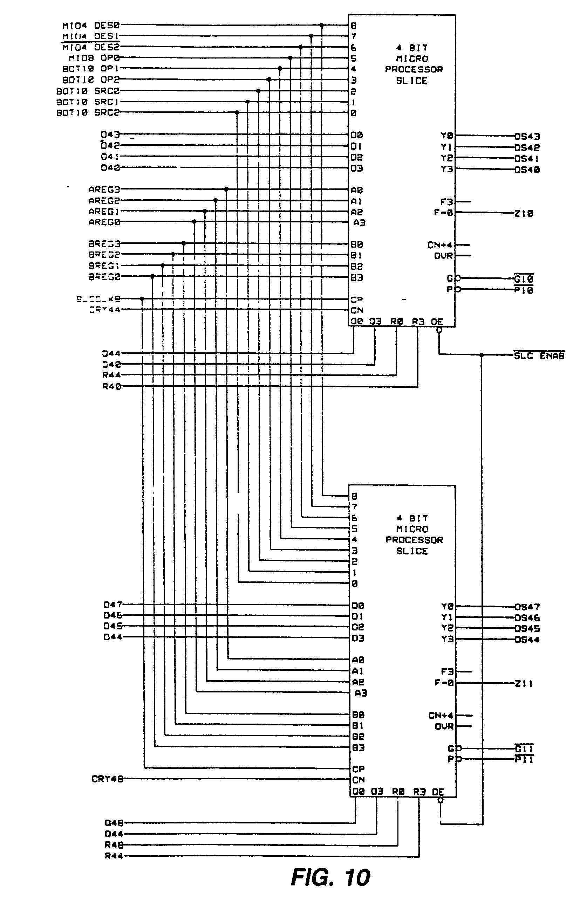

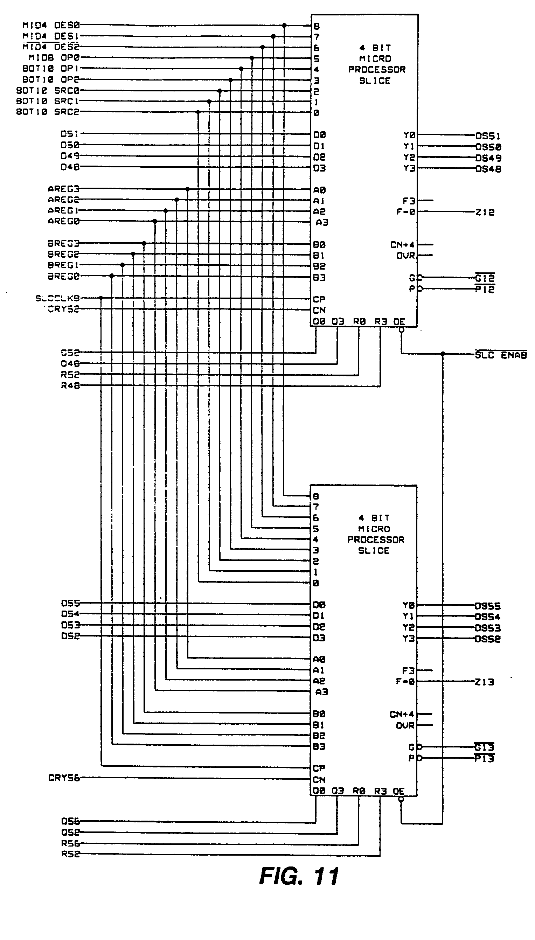

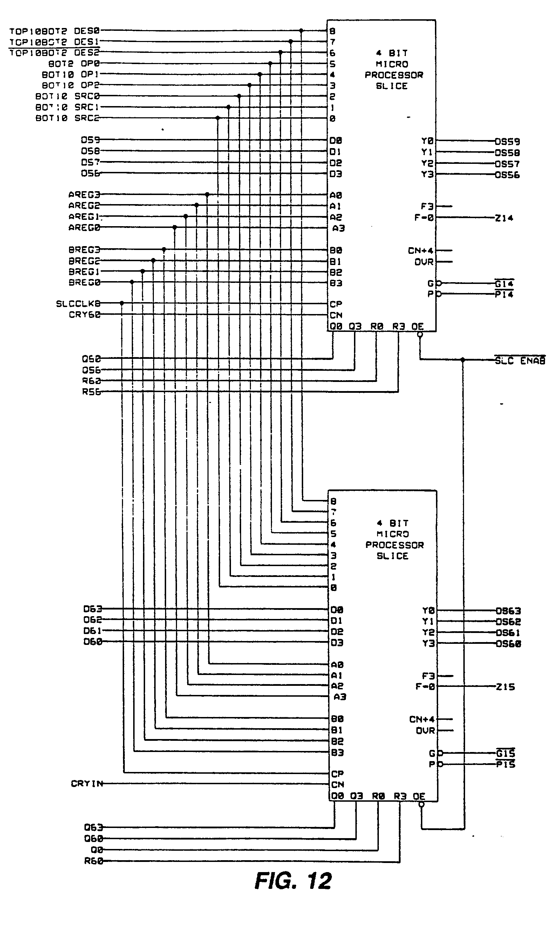

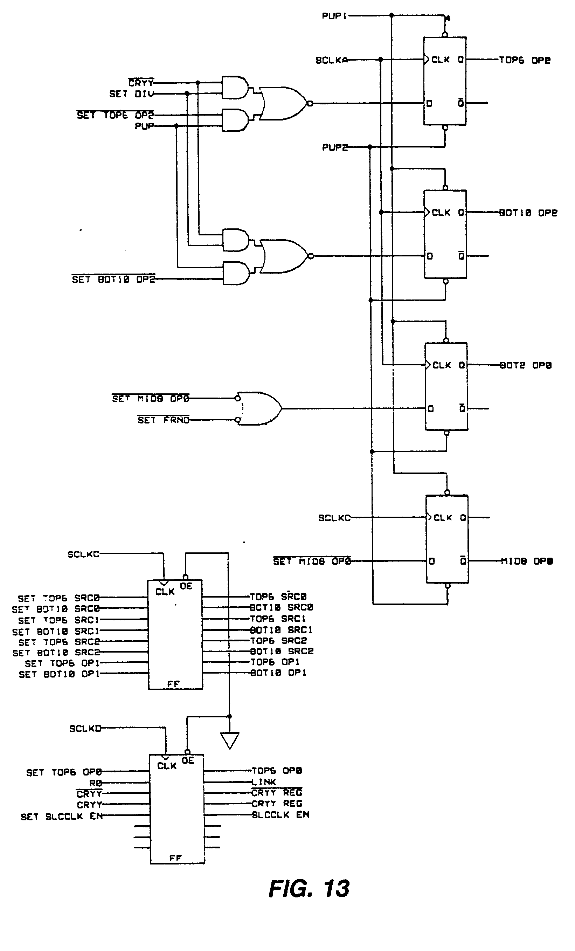

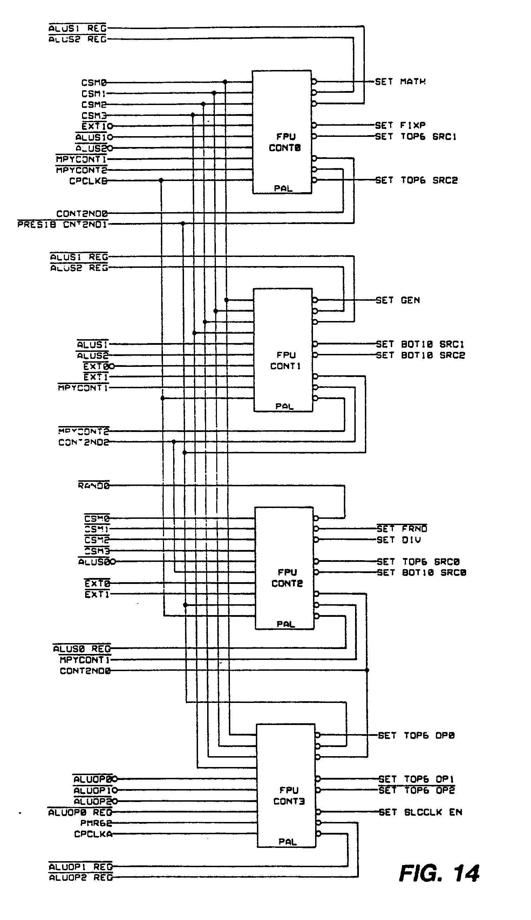

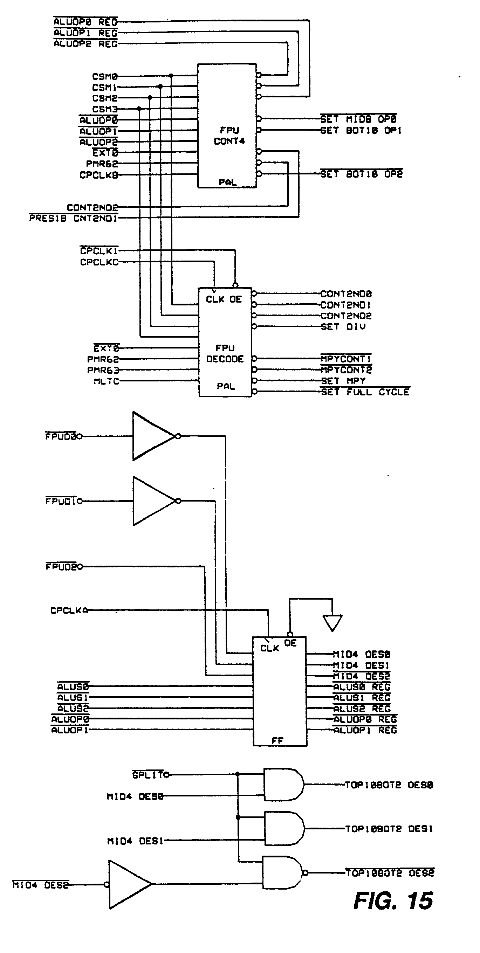

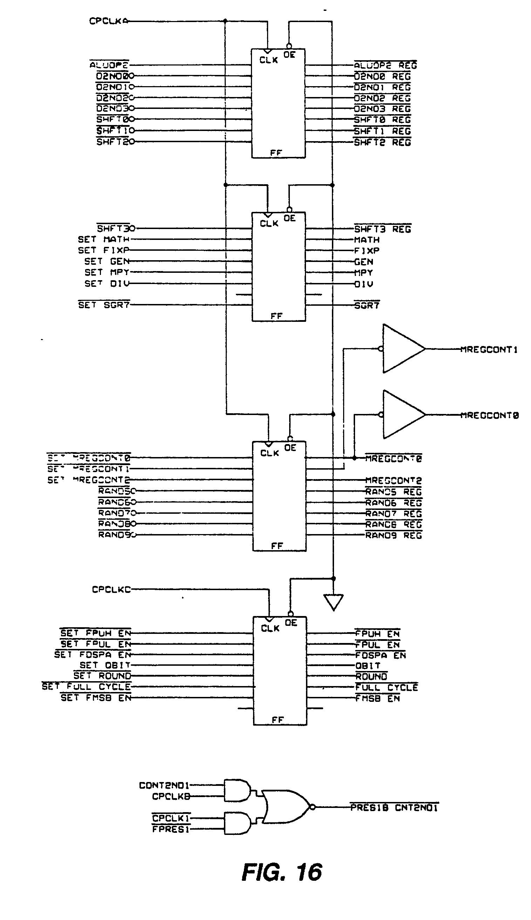

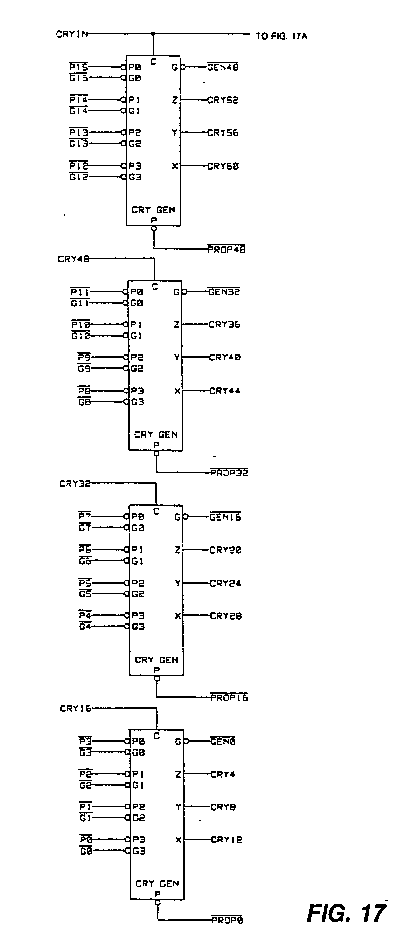

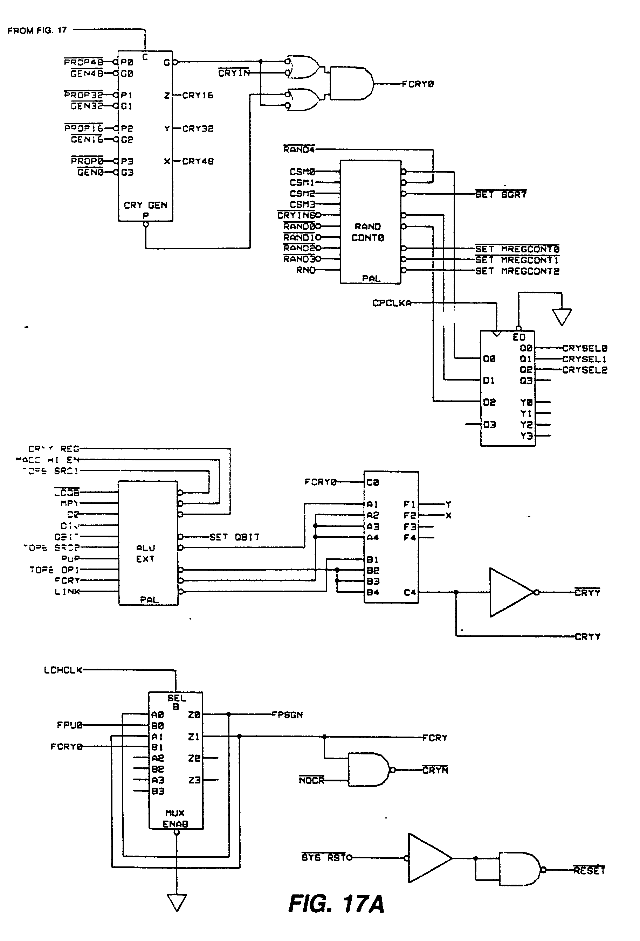

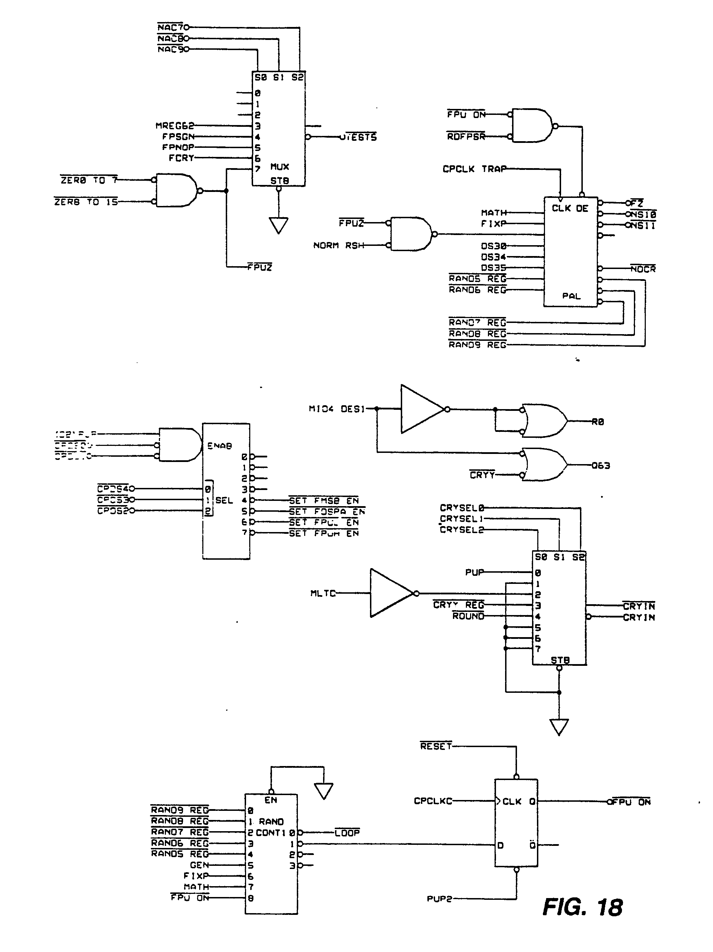

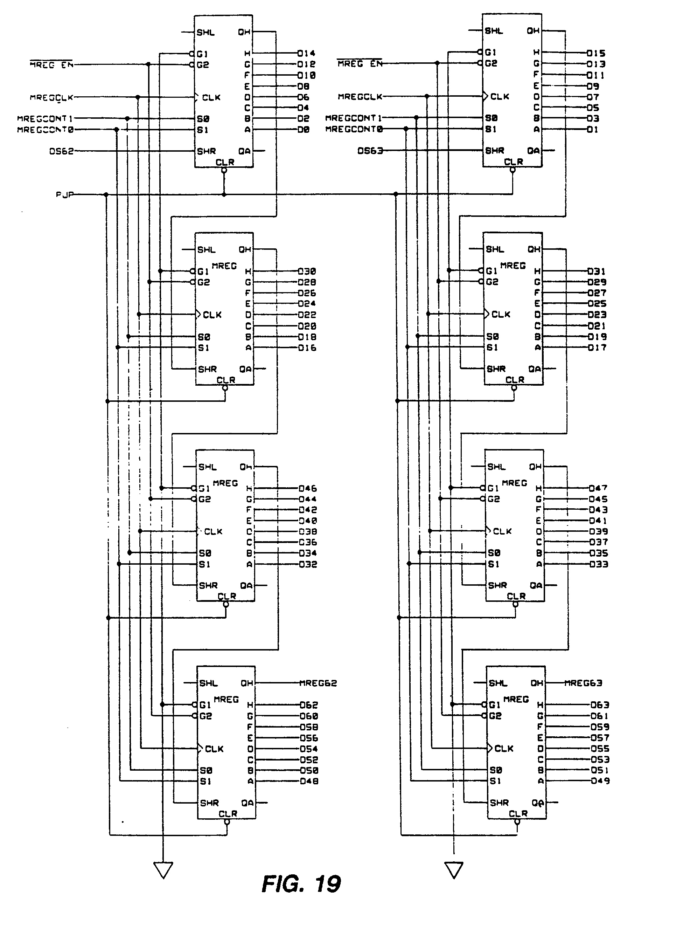

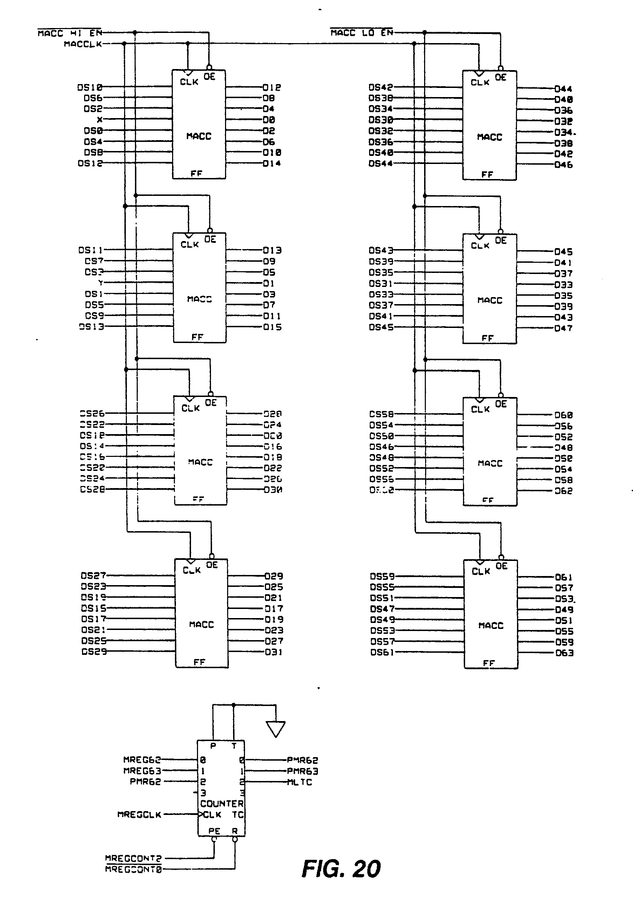

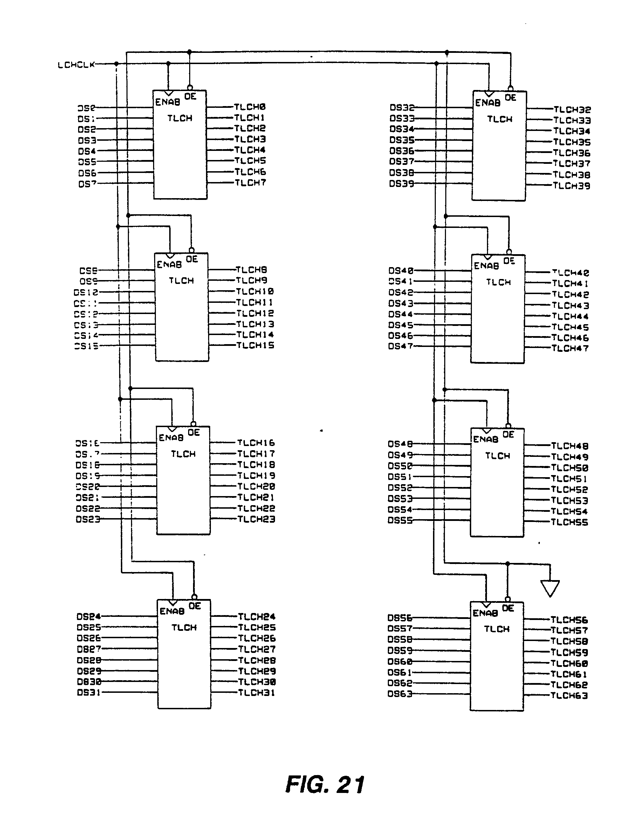

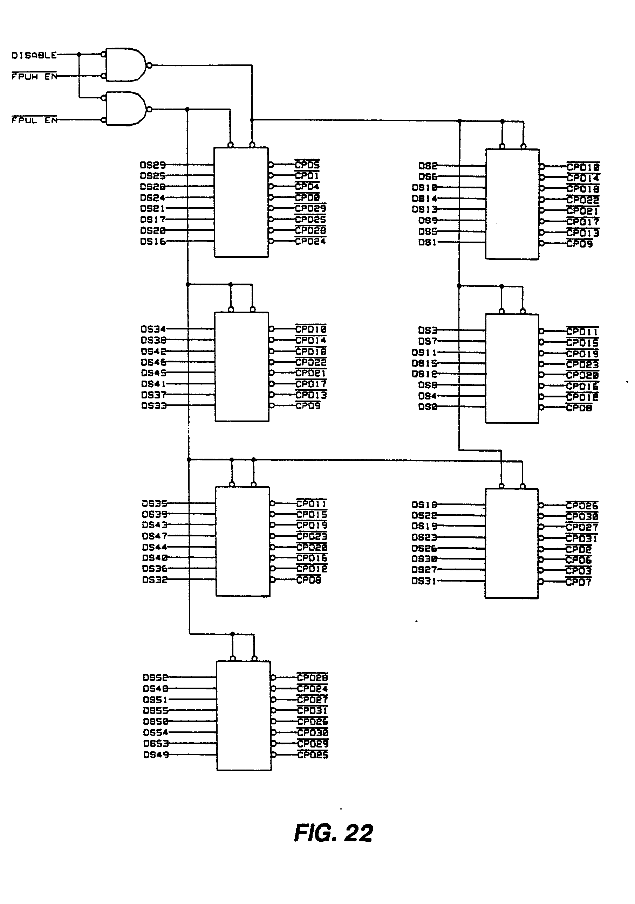

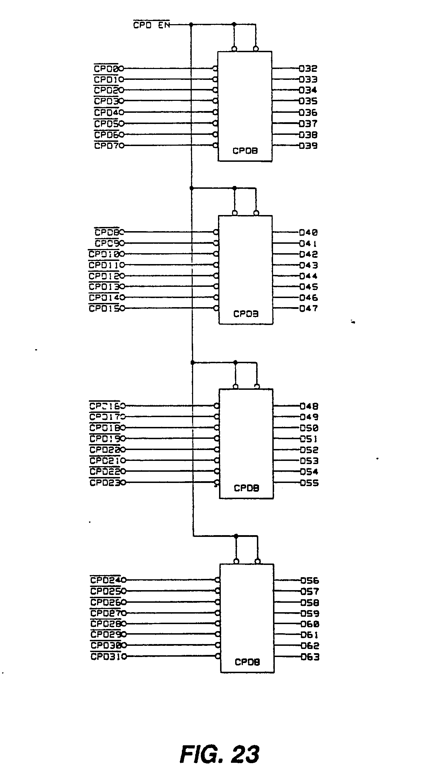

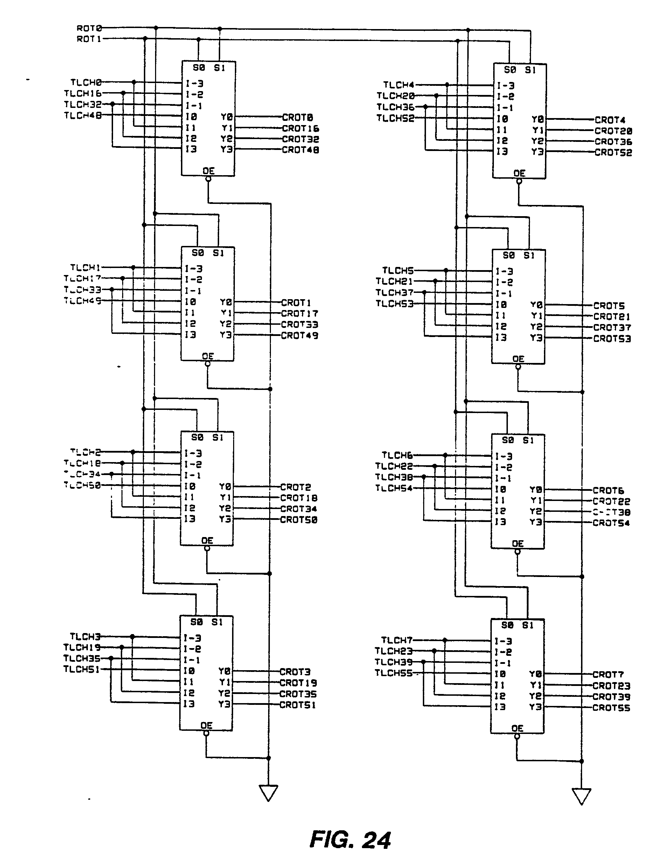

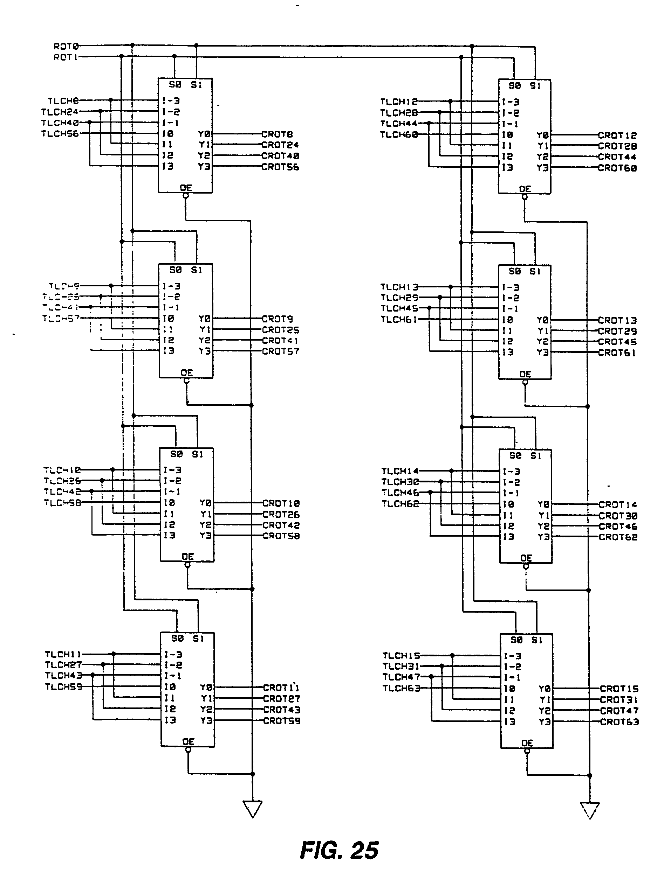

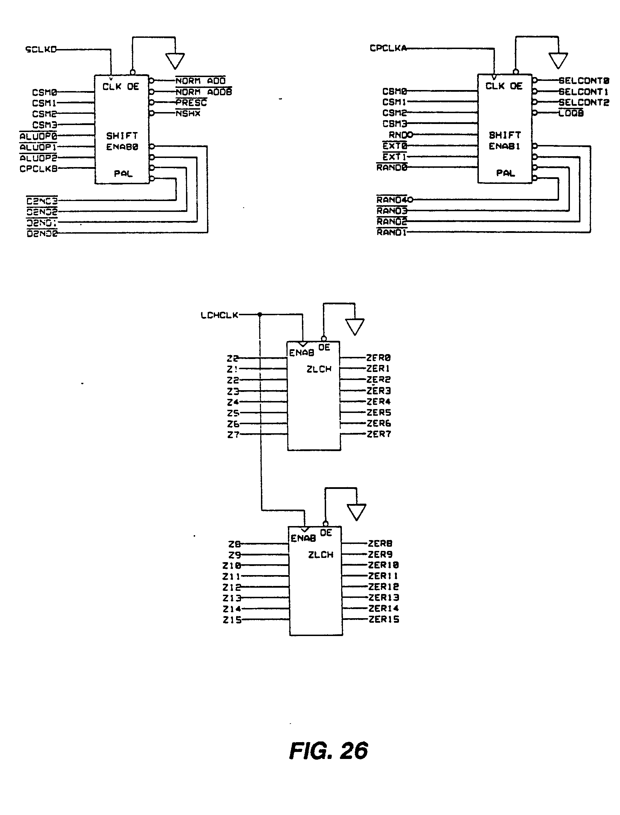

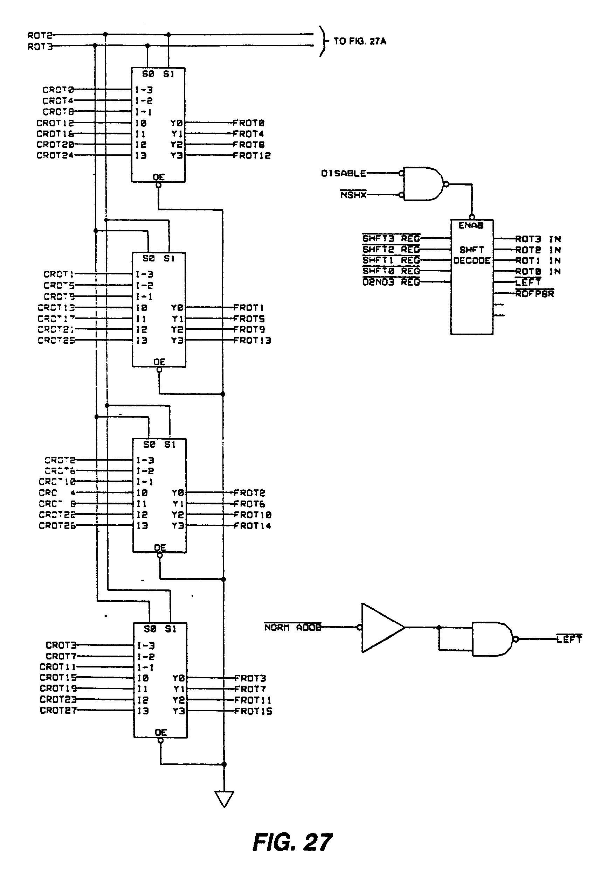

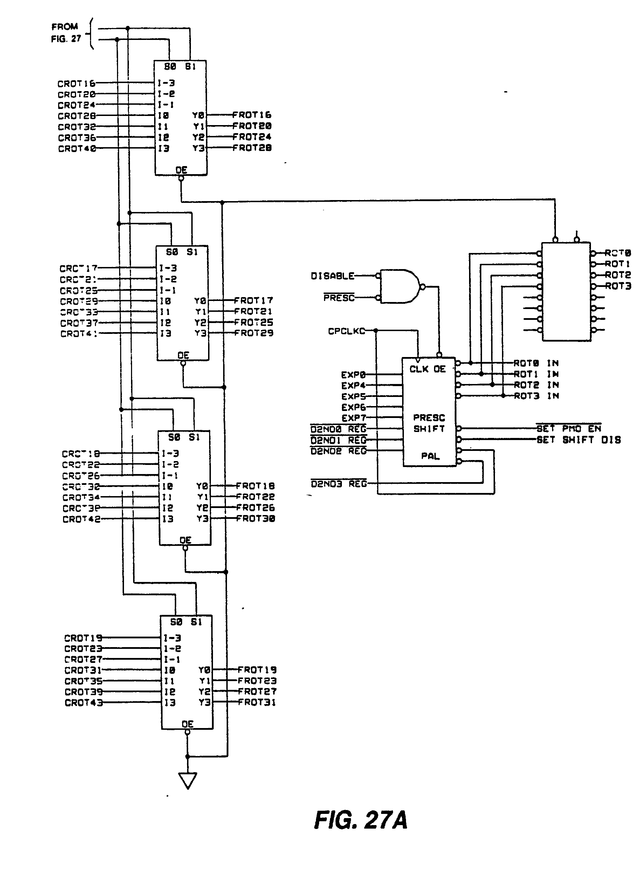

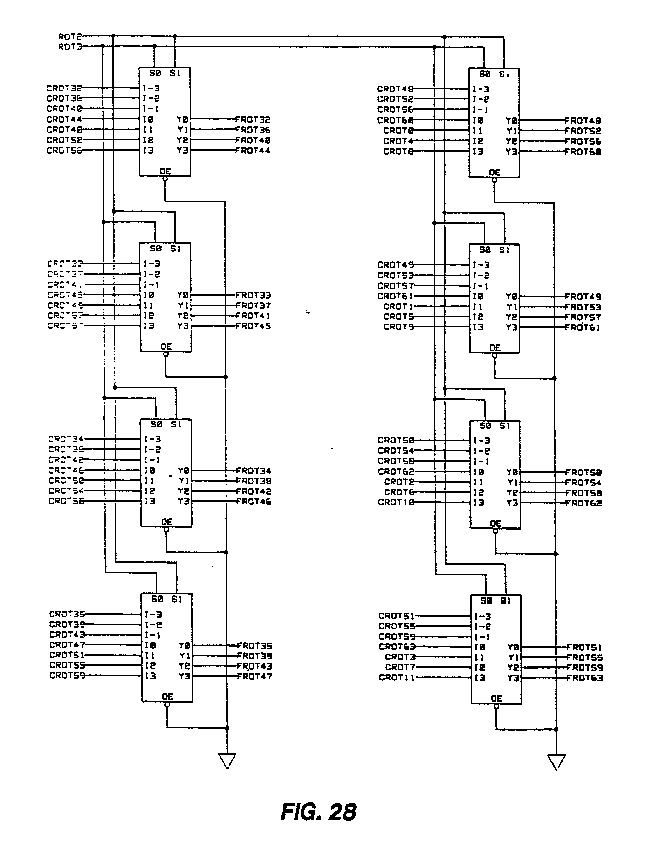

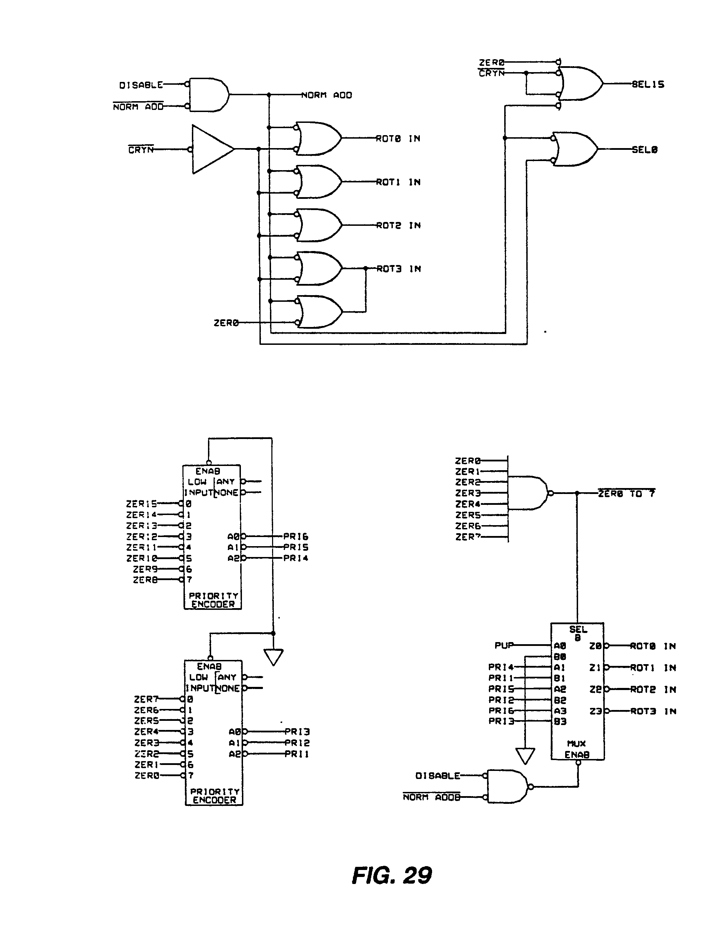

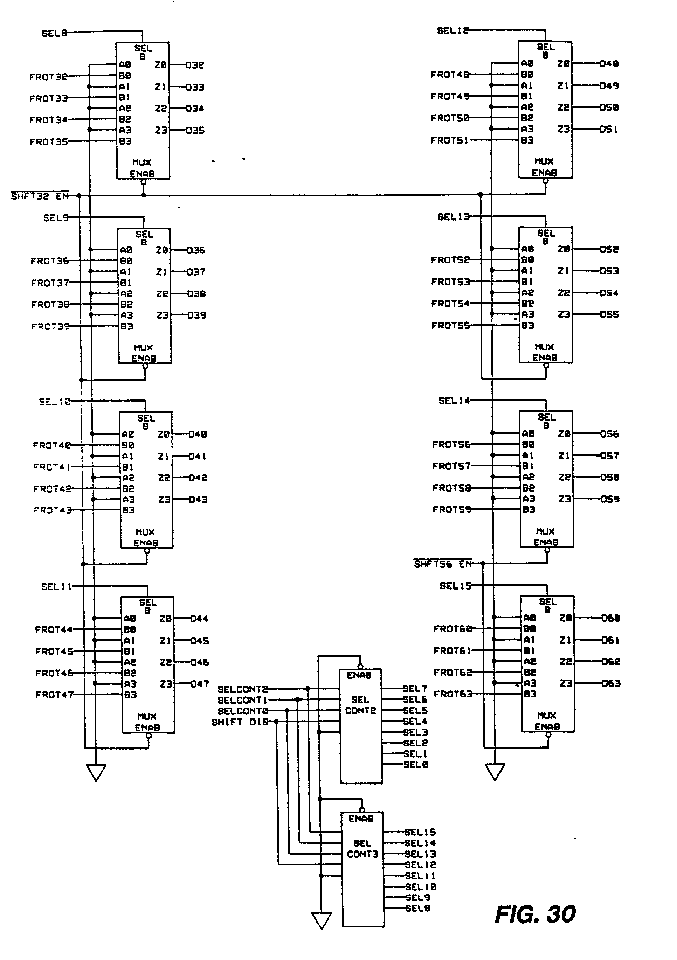

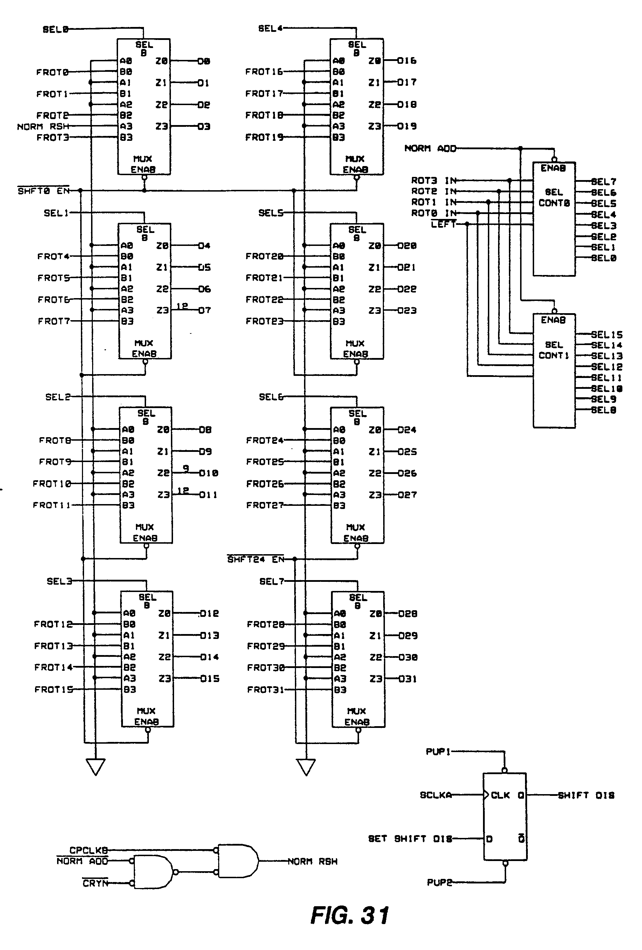

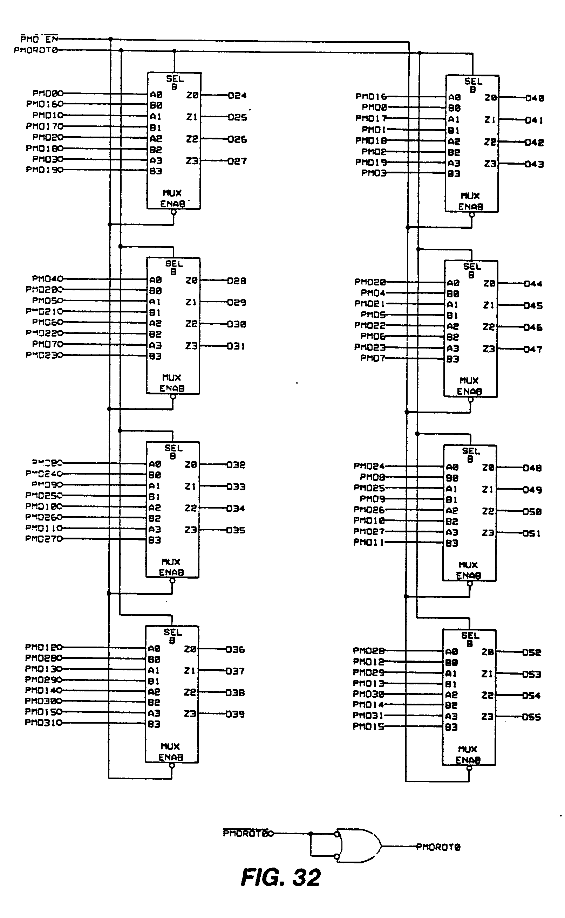

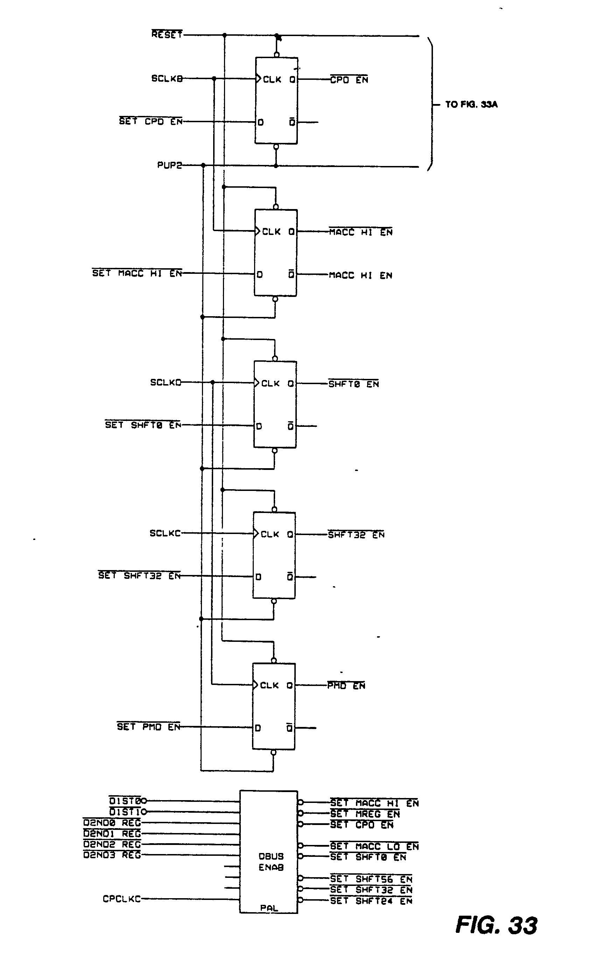

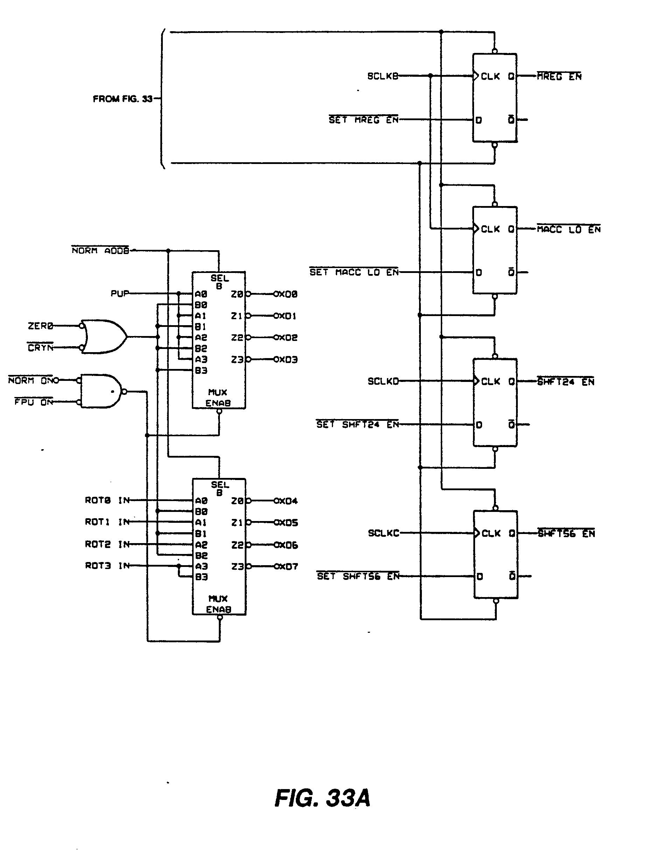

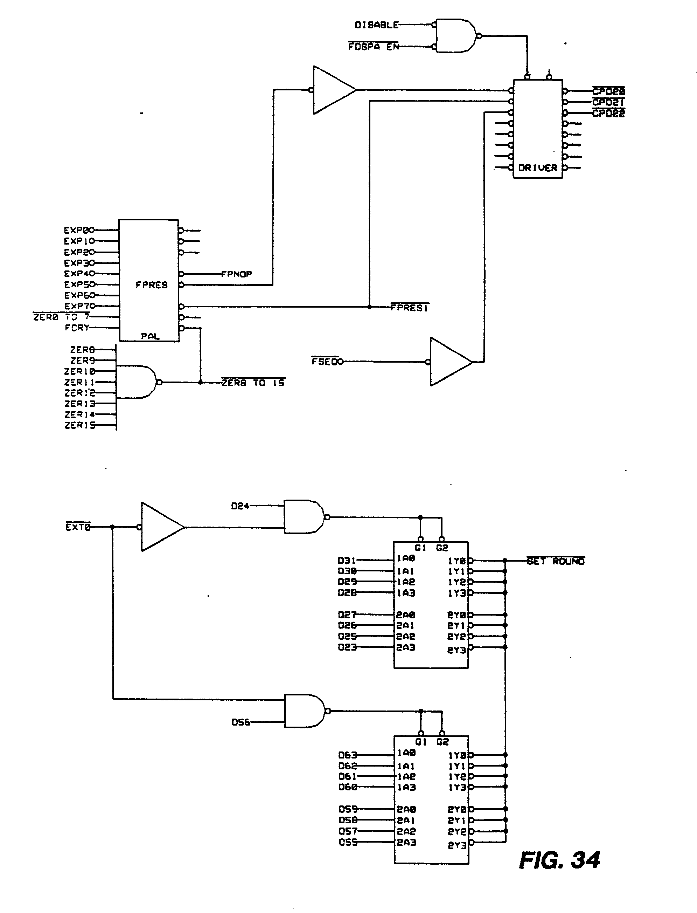

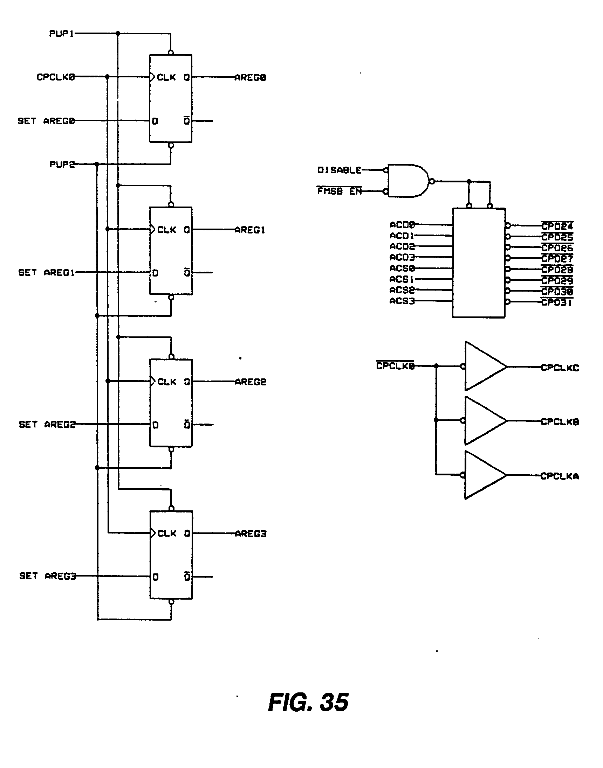

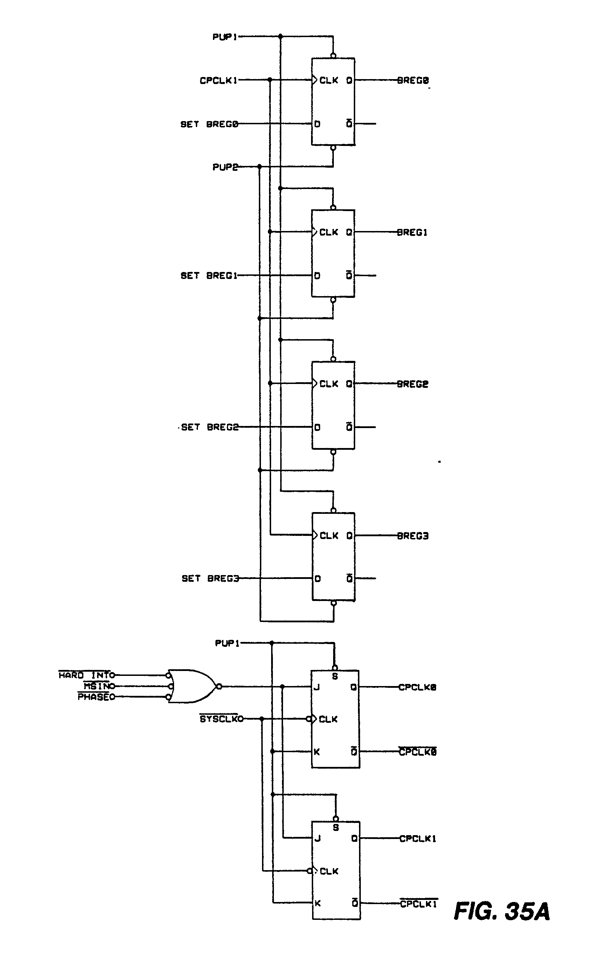

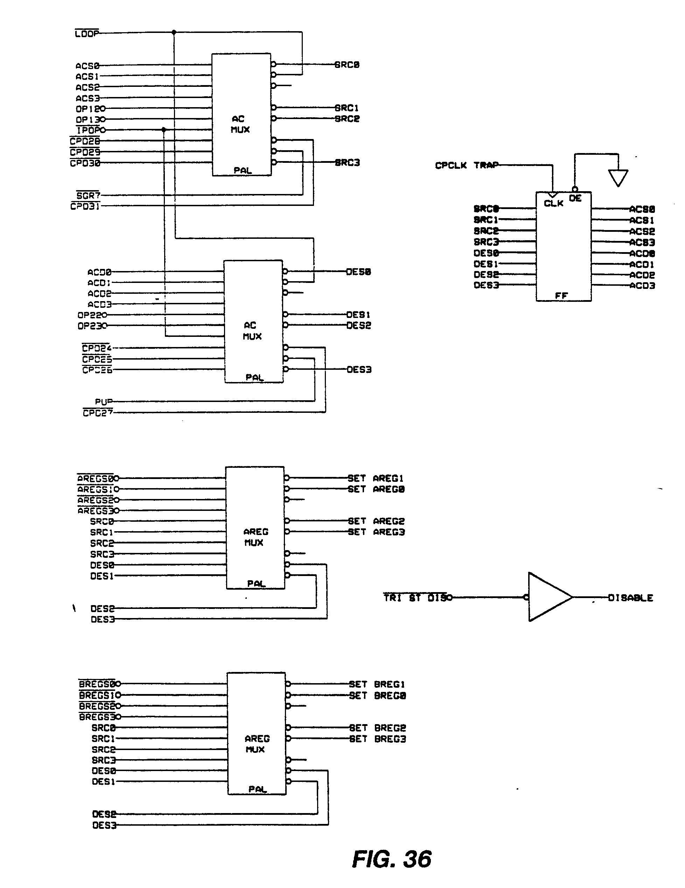

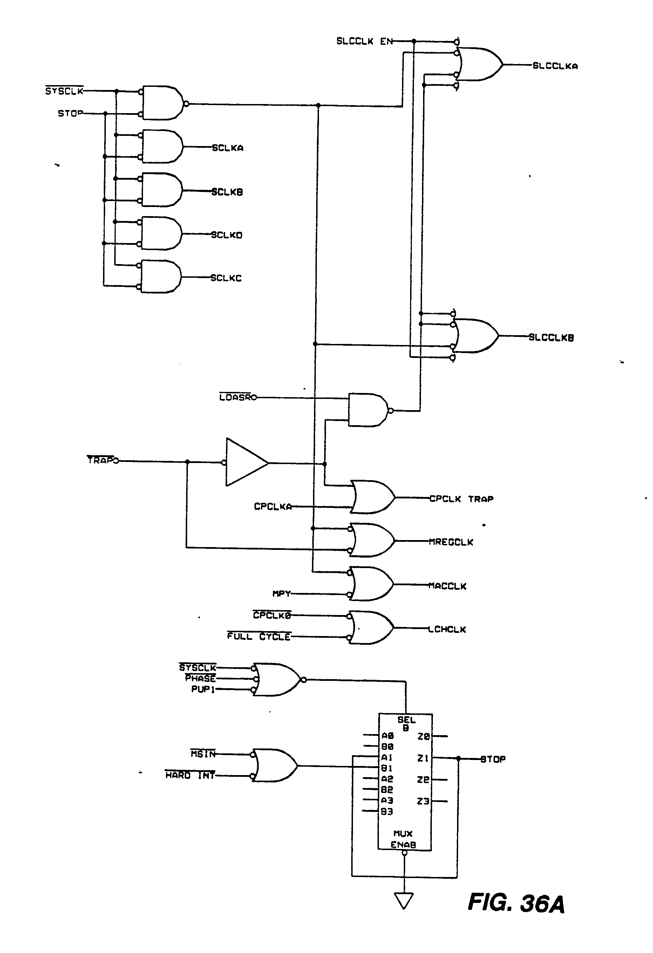

Specific logic which is used to implement the floating point unit board of FIG. 3 and 4 is shown in Figs. 5—36. Thus, the 4-bit microprocessor slice logic is depicted in Figs. 5—12. Figs. 13—16 show the 4-bit slice control logic and the control store mode (CSM) and extension (EXT) decode logic. Figs. 17—18 show various logic such as the look-ahead carry logic, floating point status register logic, test logic, random field logic and the central processor data (CPD) bus control logic. Figs. 19—20 depict logic associated with the operation of the multiply register (MREG) and multiply accumulator (MACC) of Figs. 3 and 4. Figs. 21—23 show logic associated with the T-latch unit and the CPD bus interface logic depicted in Figs. 3 and 4. Figs. 24—26 show logic associated with the coarse nibble rotator, the Z-latch logic and the shift enable logic of Figs. 3 and 4. Figs. 27—29 show logic associated with the fine nibble rotator of Figs. 3 and 4 and further shift control logic. The nibble shift multiplexer units and the processor memory data bus interface logic are shown in Figs. 30—32. D-bus enable logic, dispatch logic, normalization logic and the round logic for generating the round bit $\overline{\text{SET ROUND}}$ are depicted in Figs. 33—34. The ACSR (source register), ACDR (destination register), A-register and B-register logic of Figs. 3 and 4 are shown in Figs. 35—36, as well as various clock logic required for FPU operation. The use by those in the art of such specific logic as depicted in Figs. 5—36, together with the foregoing description, will permit one in the art to practise the invention and to fabricate an FPU board thereof in accordance with the invention, as set forth above.

TABLE I

CSM & EXT - Control Store Mode & Extension Fields

| CSM | | EXT | | Half-cycle 1 | | | Half-cycle 2 | | |
|---|---|---|---|---|---|---|---|---|---|
| Mncm | Val | Mnem | Val | ALUS | ALUOP | FPUD | ALUS | ALUOP | FPUD |
| SMATH | 0 | | | | | | | | |
| SFIXP | 1 | DBL | 0 | uI16 | uI16 | # | DZ16 | OR16 | uI |
| SGEN | 2 | SGL | 2 | uI6/DZ1O | uI6/AND1O | # | DZ16 | OR6/AND1O | uI |
| SATU | 3 | | | | | | | | |
| FMATH | 4 | | | | | | | | |
| FFIXP | 5 | DBL | 0 | uI16 | uI16 | # | uI16 | uI16 | uI |
| FGEN | 6 | SGL | 2 | uI6/DZ1O | uI6/AND1O | # | uI6/DZ1O | uI6/AND1O | uI |
| FATU | 7 | | | | | | | | |
| BOUT | A | | | | | | | | |
| QDEC | C | DBL | 0 | uI16 | uI16 | # | uI16 | uI16 | uI |
| QINC | D | SGL | 2 | uI6/DZ1O | uI6/AND1O | # | uI6/DZ1O | uI6/AND1O | uI |
| QADD | E | | | | | | | | |
| MPY | 8 | NOP | 0 | @16 | @16 | # | @16 | @16 | uI |
| MPY | 8 | FST | 1 | @16 | @16 | # | @16 | @16 | uI |
| DIV | 9 | NOP | 0 | uI16 | @16 | uI | uI16 | @16 | uI |
| NORM | B | DBL | 0 | uI16 | uI16 | # | DZ16 | OR16 | uI |
| NORM | B | ADS | 1 | uI6/ZQ1O | uI16 | # | DZ16 | OR16 | uI |
| NORM | B | SGL | 2 | uI6/DZ1O | uI6/AND1O | # | DZ16 | OR16 | uI |
| PRESC | F | WTR | 0 | @16 | uI16 | # | DZ16 | OR16 | uI |
| PRESC | F | NTR | 1 | @16 | uI16 | # | DZ16 | OR16 | uI |

In the tables the following abbreviations are used:

uI - Represents the u-order from the appropriate field of the specified instruction.

uI16 - The u-order from the appropriate field of the specified u-instruction controls all 16 slices.

<specified>16 - The specified u-order from the above table controls all 16 slices.

# - No clock takes place, but the FPUD u-order still controls the AOUT multiplexer, i.e. <O-31> still gets the value centraled by uI.

@ (@16) - The u-order will defer to a predecoded or "Forced" value (for all 16 slices).

uI6/<specified>1O - The u-order from the appropriate field of the specified u-instruction controls the most significant 6 slices. The least significant 1O slices are forced to the <specified> u-order from the above table.

8

# 0 067 667

TABLE 2

| Mnem | Val | Half-cycle 1 | | | Half-cycle 2 | | | DIST Type | CRYIN | RAND Type |
|------|-----|------|-------|------|------|-------|------|------|-------|------|
| | | ALUS | ALUOP | ALUD | ALUS | ALUOP | ALUD | | | |
| SMATH | 0 | uI | uI | # | DZ | OR | uI | Math | Type0 | Math |
| SFIXP | 1 | uI | uI | # | DZ | OR | uI | Gen | Type1 | Fixp |
| SGEN | 2 | uI | uI | # | DZ | OR | uI | Gen | Type0 | Gen |
| SATU | 3 | uI | uI | # | DZ | OR | uI | Gen | Type0 | Atu |
| FMATH | 4 | uI | uI | # | uI | uI | uI | Math | Type0 | Math |
| FFIXP | 5 | uI | uI | # | uI | uI | uI | Gen | Type1 | Fixp |
| FGEN | 6 | uI | uI | # | uI | uI | uI | Gen | Type0 | Gen |
| FATU | 7 | uI | uI | # | uI | uI | uI | Gen | Type0 | Atu |
| MPY | 8 | @ | @ | # | @ | @ | uI | Math | Type2 | Math |
| DIV | 9 | uI | @ | uI | uI | @ | uI | Math | Type3 | Math |
| BOUT | A | uI | uI | # | ZB | OR | uI | Gen | Type0 | Gen |
| NORM | B | uI | uI | # | DZ | OR | uI | Math | Type0 | Math |
| QDEC | C | ZQ | SUB | QREG | uI | uI | uI | Gen | *Type0 | Gen |
| QINC | D | ZQ | ADD | QREG | uI | uI | uI | Gen | *Type0 | Gen |
| QADD | E | DQ | ADD | QREG | uI | uI | uI | Gen | *Type0 | Gen |
| PRESC | F | @ | OR | # | DZ | OR | uI | Math | Type0 | Math |

\* - The CRYIN is forced to a zero in the first half cycle in modes QDEC and QADD, and to a one during the first half of mode Qinc.

## Claims

1. A data processing system handling both fixed point and floating point computation operations, comprising an arithmetic unit for providing fixed point arithmetic computations, a separate floating point unit for providing floating point arithmetic computations and a single control store means for supplying microinstructions to control the operations of both the units, characterised in that the microinstructions comprise commonly shared control fields to which both of the units are simultaneously responsive to perform their respective operations, and first and second control fields (ALUD and FPUD) which identify respectively the destination of a fixed point computation result from the arithmetic unit and the destination of a floating point computation result from the floating point unit, and in that each of the first and second fields can be given a value which specifies a no-load operation and prevents the use of any computation results from the arithmetic unit and the floating point unit respectively.

2. A system in accordance with claim 1 characterised in that a common control field (ALUS) of the control store is used to identify the source of data which is to be supplied either to the arithmetic unit when it is computing a fixed point result or to the floating point unit when it is computing a floating point result.

3. A system in accordance with claim 2, characterised in that a common control field (ALUOP) of the control store is used to identify the operation which is to be performed by either the arithmetic unit when it is performing a fixed point operation of the floating point unit when it is performing a floating point operation.

4. A system according to any of claims 1 to 3 characterised in that the said at least one additional control field comprises a control field (EXT) for identifying whether the floating point unit is operating on data words of a first or a second number of data bits.

5. A system in accordance with claim 4, characterised in that the first number is 32 bits for providing a 24 bit floating point mantissa result and the second number is 64 bits for providing a 56 bit floating point mantissa result.

6. A system in accordance with claim 5, characterised in that, when the control field identifies a 32 bit operation, the field controls the operation of the floating point unit in a manner such that the operands of the computation used for the first 24 bits of the floating point words are controlled by a microinstruction from the control store and the remaining 40 bits of the floating point words are zero.

7. A system according to any of claims 1 to 6, wherein the floating point unit includes processing means for providing an overall computation result comprising a first plurality of bits representing a desired floating point computation result and a second plurality of bits not used in this desired computation result; and means for providing a carry-in bit to be added to the floating point computation result; characterised by means for adding the carry-in bit to the least significant bit of the overall computation result and for causing the carry-in bit to be effectively propagated through the processing means so as to be added to the least significant bit of the first plurality of bits to form the floating point computation result.

9

8. A system in accordance with claim 7, characterised in that the processor means comprises a plurality of multiple-bit slice processor units each processing selected bit slices of floating point operands to provide the overall computation result, the overall result being formed of a plurality of bit slices each effectively provided with a carry-in bit from an adjacent lower significant bit slice processor unit and effectively supplying a carry-out bit to an adjacent higher significant bit slice processor unit, the carry-in bit added to the least significant bit of the overall result being effectively propagated through the plurality of bit slice processors which form the second plurality of bits so as to be added to the bit slice which forms the least significant bit slice of the first plurality of bits.

9. A system in accordance with claim 8, characterised in that the processing means has an operating characteristic such that when a bit slice processor unit thereof is placed in an AND operating condition and at least one of the operands of the bit slice processor unit is set to zero, the carry-in bit is effectively propagated through the bit slice processor unit as the carry-out bit thereof.

10. A system in accordance with claim 9, characterised in that each bit slice processor unit is capable of asserting a propagate bit or a generate bit and the means for adding the carry-in bit and for causing the carry-in bit to be effectively propagated through the bit slice processor unit includes a plurality of look-ahead logic means responsive to the bit slice processor units whereby, when a bit slice processor unit asserts its propagate bit but does not assert its generate bit, the look-ahead logic means associated therewith propagates its carry-in bit but does not generate a carry-out bit.

11. A system in accordance with claim 9 or 10, characterised in that each of the bit slice processor units which form the second plurality of bits is placed in an AND operating condition and at least one of the floating point operands in the bit slice processor units is set to zero, whereby the carry-in bit is effectively propagated through each said bit slice thereof, the carry-in bit being added to the least significant bit of the first plurality of bits to form the floating point computation result.

12. A system in accordance with any of claims 8 to 11, characterised in that the bit slice processor units each process 4 bits of the floating point operands.

13. A system in accordance with any of claims 8 to 12, characterised in that the overall floating point computation result comprises 64 bits.

14. A system in accordance with claim 13, characterised in that the first plurality of bits comprises 24 bits and the second plurality of bits comprises 40 bits.

15. A system in accordance with claim 13, characterised in that the first plurality of bits comprises 56 bits and the second plurality of bits comprises 8 bits.

16. A system in accordance with any of claims 7 to 15, characterised in that the floating point computation result is an unrounded result and the means providing the carry-in bit comprises means for providing a round bit as the carry-in bit which is added to the least significant bit of the overall computation result, the round bit thereby being added to the unrounded result to produce a rounded floating point computation result.

17. A system in accordance with any of claims 7 to 15, characterised in that the means providing the carry-in bit comprises means responsive to a carry-in bit supplied from a source external to the floating point computation unit as the carry-in bit which is added to the least significant bit of the overall computation result, the externally supplied carry-in bit thereby being added to the floating point computation result.

## Patentansprüche

1. Datenverarbeitungssystem zur Durchführung von Fest- und Gleitkomma-Rechenoperationen, enthaltend eine arithmetische Einheit zur Durchführung von Festkomma-Rechenoperationen, eine separate Gleitkomma-Einheit zur Durchführung von Gleitkomma-Rechenoperationen und eine einzige Steuerspeichereinrichtung zur Lieferung von Mikrobefehlen für die Steuerung der Operationen beider Einheiten, dadurch gekennzeichnet, daß die Mikrobefehle gemeinsam benutzte Steuerfelder, auf die beide Einheiten zur Durchführung ihrer entsprechenden Operationen gleichzeitig ansprechen, und erste und zweite Steuerfelder (ALUD und FPUD) aufweisen, die jeweils das Ziel eines Festkomma-Rechenergebnisses der arithmetischen Einheit und das Ziel eines Gleitkomma-Rechenergebnisses der Gleitkomma-Einheit bezeichnen, und daß jedem der ersten und zweiten Felder ein Wert gegeben werden kann, der eine Nicht-Lade-Operation bestimmt und den Gebrauch irgendeines Recherchenergebnisses der arithmetischen Einheit bzw. der Gleitkomma-Einheit verhindert.

2. Datenverarbeitungssystem nach Anspruch 1, dadurch gekennzeichnet, daß ein gemeinsames Steuerfeld (ALUS) des Steuerspeichers zur Bezeichnung der Quelle von Daten benutzt wird, die entweder zur arithmetischen Einheit, wenn ein Festkomma-Ergebnis berechnet wird, oder zur Gleitkomma-Einheit zu liefern ist, wenn ein Gleitkomma-Ergebnis berechnet wird.

3. Datenverarbeitungssystem nach Anspruch 2, dadurch gekennzeichnet, daß ein gemeinsames Steuerfeld (ALUOP) des Steuerspeichers zur Bezeichnung derjenigen Operationen benutzt wird, die entweder von der arithmetischen Einheit, wenn eine Festkomma-Operation durchgeführt wird, oder von der Gleitkomma-Einheit auszuführen ist, wenn eine Gleitkomma-Operation durchgeführt wird.

4. Datenverarbeitungssystem nach einem der Ansprüche 1 bis 3, dadurch gekennzeichnet, daß das wenigstens eine zusätzliche Steuerfeld ein Steuerfeld (EXT) enthält, um anzuzeigen, ob die Gleitkomma-Einheit gerade die Datenworte mit einer ersten oder einer zweiten Anzahl von Datenbits bearbeitet.

5. Datenverarbeitungssystem nach Anspruch 4, dadurch gekennzeichnet, daß die erste Anzahl 32 Bits ist, um ein Gleitkomma-Mantissenergebnis mit 24 Bits zu liefern, und daß die zweite Anzahl 64 Bits ist, um die Gleitkomma-Mantissenergebnis von 56 Bits zu liefern.

6. Datenverarbeitungssystem nach Anspruch 5, dadurch gekennzeichnet, daß, wenn das Steuerfeld eine 32-Bit-Operation anzeigt, das Feld die Operation der Gleitkomma-Einheit in einer Weise steuert, daß die Operanden der Berechnung, die für die ersten 24 Bits des Gleitkomma-Wortes benutzt werden, durch einen Mikrobefehl des Steuerspeichers gesteuert werden und die übrigen 40 Bits der Gleitkomma-Worte Null sind.

7. Datenverarbeitungssystem nach einem der Ansprüche 1 bis 6, bei dem die Gleitkomma-Einheit Verarbeitungsmittel zur Lieferung eines Gesamtrechener gebnisses, das eine erste Anzahl von Bits enthält, die ein gewünschtes Gleitkomma-Rechenergebnis repräsentieren, und eine zweite Anzahl von Bits enthält, die in diesem gewünschten Rechenergebnis nicht benutzt werden, und Mittel zur Bereitstellung eines zum Gleitkomma-Rechenergebnis zu addierenden Eingangsübertragsbits (— carry-in bit) aufweist, dadurch gekennzeichnet, daß Addiermittel vorgesehen sind, um das Eingangsübertragsbit zum niedrigstwertigen Bit des Gesamtrechenergebnisses zu addieren und um zu verursachen, daß dieses wirksam so durch die Verarbeitungsmittel weitergegeben wird, daß es zum niedrigstwertigen Bit der ersten Anzahl von Bits hinzuaddiert wird, um das Gleitkomma-Rechenergebnis zu liefern.

8. Datenverarbeitungssystem nach Anspruch 7, dadurch gekennzeichnet, daß das Verarbeitungsmittel eine Vielzahl von Mehrbitblock-Prozessoreinheiten enthält, die jeweils ausgewählte Bitblöcke von Gleitkomma-Operanden verarbeiten, um das Gesamtrechenergebnis zu liefern, das aus einer Vielzahl von Bitblöcken gebildet wird, die jeweils wirksam mit einem Eingangsübertragsbit (= carry-in bit) von einer benachbarten, geringerwertigen Bitblock-Prozessoreinheit versehen sind und ein Ausgangsübertragsbit (= carry-out bit) wirksam an eine benachbarte, höherwertige Bitblock-Prozessoreinheit liefern, wobei das Eingangsübertragsbit, das dem niedrigstwertigen Bit des Gesamtergebnisses hinzuaddiert wird, wirksam durch die Anzahl derjenigen Bitblock-Prozessoreinheiten weitergeleitet wird, die die zweite Anzahl von Bits bilden, um zu demjenigen Bitblock hinzuaddiert zu werden, der den niedrigstwertigen Bitblock der ersten Anzahl von Bits bildet.

9. Datenverarbeitungssystem nach Anspruch 8, dadurch gekennzeichnet, daß das Verarbeitungsmittel eine derartige Operationseigenschaft besitzt, daß, wenn eine seiner Bitblock-Prozessoreinheiten in einen UND-Operationszustand versetzt und wenigstens einer der Operanden der Bitblock-Prozessoreinheit auf Null gesetzt ist, das Eingangsübertragsbit wirksam durch die Bitblock-Prozessoreinheit als deren Ausgangsübertragsbit weitergegeben wird.

10. Datenverarbeitungssystem nach Anspruch 9, dadurch gekennzeichnet, daß jede Bitblock-Prozessoreinheit befähigt ist, ein Propagate-Bit oder ein Generate-Bit festzustellen und daß die Addiermittel zum Addieren des Eingangsübertragsbits und zum Verursachen der Weitergabe des Eingangsübertragsbits durch die Bitblock-Prozessoreinheit eine Vielzahl von Look-Ahead-Logikmitteln aufweist, die auf die Bitblock-Prozessoreinheiten ansprechen, wodurch, wenn eine Bitblock-Prozessoreinheit ihre Propagate-Bit, aber nicht ihr Generate-Bit feststellt, das zugeordnete Look-Ahead-Logikmittel ihr Eingangsübertragsbit weitergibt, aber kein Ausgangsübertragsbit erzeugt.

11. Datenverarbeitungssystem nach Anspruch 9 oder 10, dadurch gekennzeichnet, daß jede der Bitblock-Prozessoreinheiten, die die zweite Anzahl von Bits bilden, in einen UND-Operationszustand versetzt ist und wenigstens einer der Gleitkomma-Operanden in der Bitblock-Prozessoreinheit auf Null gesetzt ist, wodurch das Eingangsübertragsbit wirksam durch jeden dieser Bitblöcke weitergegeben und zum niedrigstwertigen Bit der ersten Anzahl von Bits addiert wird, um das Gleitkomma-Rechenergebnis zu bilden.

12. Datenverarbeitungssystem nach einem der Ansprüche 8 bis 11, dadurch gekennzeichnet, daß die Bitblock-Prozessoreinheiten jeweils vier Bits der Gleitkomma-Operanden bearbeiten.

13. Datenverarbeitungssystem nach einem der Ansprüche 8 bis 12, dadurch gekennzeichnet, daß das Gleitkomma-Gesamtrechenergebnis 64 Bits enthält.

14. Datenverarbeitungssystem nach Anspruch 13, dadurch gekennzeichnet, daß die erste Anzahl von Bits 24 Bits und die zweite Anzahl von Bits 40 Bits enthält.

15. Datenverarbeitungssystem nach Anspruch 13, dadurch gekennzeichnet, daß die erste Anzahl von Bits 56 Bits und die zweite Anzahl von Bits 8 Bits enthält.

16. Datenverarbeitungssystem nach einem der Ansprüche 7 bis 15, dadurch gekennzeichnet, daß das Gleitkomma-Rechenergebnis ein ungerundetes Ergebnis ist und die Mittel zur Bereitstellung des Eingangsübertragsbits ein Mittel zur Lieferung eines Rundungsbits als Eingangsübertragsbit aufweisen, das dem niedrigstwertigen Bit des Gesamtrechenergebnisses hinzuaddiert wird, wodurch das Rundungsbit dem ungerundeten Ergebnis hinzuaddiert wird, um ein gerundetes Gleitkomma-Rechenergebnis zu erzeugen.

17. Datenverarbeitungssystem nach einem der Ansprüche 7 bis 15, dadurch gekennzeichnet, daß das Mittel zur Bereitstellung des Eingangsübertragsbits ein Mittel enthält, das auf ein von einer Quelle außerhalb der Gleitkomma-Recheneinheit geliefertes Eingangsübertragsbit als dasjenige Eingangsübertragsbit anspricht, das dem niedrigstwertigen Bit des Gesamtrechenergebnisses hinzuaddiert werden soll, wodurch das von außerhalb gelieferte Eingangsübertragsbit dem Gleitkomma-Rechenergebnis hinzuaddiert wird.

## 0 067 667

**Revendications**

1. Système de traitement de données traitant à la fois les opérations de calcul en virgule fixe et en virgule flottante, comprenant une unité arithmétique pour fournir les calculs arithmétiques en virgule fixe, une unité séparée de virgule flottante pour fournir les calculs arithmétiques en virgule flottante, et un moyen de mémorisation de commande unique pour fournir des microinstructions pour commander le fonctionnement des deux unités, caractérisé en ce que les microinstructions comprennent des champs de commande partagés en commun auxquels chacune des deux unités peuvent répondre simultanément pour réaliser leurs opérations respectives, et un premier et un second champ de commande (ALUD et FPUD) qui désignent respectivement la destination d'un résultat de calcul en virgule fixe provenant de l'unité arithmétique et la destination d'un résultat de calcul en virgule flottante provenant de l'unité de virgule flottante, et en ce que chacun des premier et second champs peuvent contenir une valeur qui désigne une opération de non-chargement et évite l'utilisation de tout résultat de calcul provenant de l'unité arithmétique et de l'unité de virgule flottante, respectivement.

2. Système selon la revendication 1, caractérisé en ce qu'un champ de commande commun (ALUS) du moyen de mémorisation de commande est utilisé pour identifier l'origine des données qui sont fournies aussi bien à l'unité arithmétique lorsqu'elle est en train de calculer un résultat en virgule fixe on à l'unité de virgule flottante lorsqu'elle est en train de calculer un résultat en virgule flottante.

3. Système selon la revendication 2, caractérisé en ce qu'un champ de commande commun (ALUOP) du moyen de mémorisation de commande est utilisé pour identifier l'opération qui doit être réalisée aussi bien par l'unité arithmétique lorsqu'elle est en train de réaliser une opération en virgule fixe que par l'unité en virgule flottante lorsqu'elle est en train de réaliser une opération en virgule flottante.

4. Système selon une quelconque des revendications 1 à 3, caractérisé en ce que ledit champ de commande supplémentaire comprend un champ de commande (EXT) pour vérifier si l'unité en virgule flottante fonctionne sur des mots de données d'un premier ou d'un second nombre de bits de données.

5. Système selon la revendication 4, caractérisé en ce que le premier nombre est 32 bits pour fournir un résultat ayant 24 bits de mantisse en virgule flottante et le second nombre est 64 bits pour fournir un résultat à 56 bits de mantisse en virgule flottante.

6. Système selon la revendication 5, caractérisé en ce que lorsque le champ de commande identifie une opération de 32 bits, le champ commande le fonctionnement de l'unité en virgule flottante de façon à ce que les opérandes du calcul utilisées pour les 24 premiers bits du mots en virgule flottante soient commandés par une microinstruction provenant de la mémorisation de commande et telle que les 40 bits restants en virgule flottante soient nuls.

7. Système selon une quelconque des revendications 1 à 6, dans lequel l'unité en virgule flottante comprend des moyens de traitement pour fournir un résultat complet de calcul comprenant une première pluralité de bits représentant un résultat de calcul en virgule flottante voulu et une seconde pluralité de bits non utilisés dans ce résultat de calcul voulu; et des moyens pour fournir un bit de retenue d'entrée à ajouter au résultat du calcul en virgule flottante; caractérisé par des moyens pour ajouter le bit de retenue d'entrée au bit de plus faible poids du résultat de calcul complet pour provoquer la propagation effective du bit de retenue d'entrée à travers le moyen de traitement de façon à être ajouté au bit de plus faible poids de la première pluralité de bits pour fournir le résultat du calcul en virgule flottante.

8. Système selon la revendication 7, caractérisé en ce que le moyen de traitement comprend une pluralité d'unités de microprocesseurs en tranche de plusieurs bits traitant chacune une tranche de bits choisie d'opérandes en virgule flottante pour fournir le résultat complet du calcul, le résultat étant constitué d'une pluralité de tranches de bits, chacune effectivement pourvue d'un bit de retenue d'entrée provenant d'une unité adjacente de microprocesseur en trance de bits de plus faible poids et fournissant effectivement un bit de retenue de sortie à une unité adjacente de microprocesseur en tranche de bits de plus fort poids, le bit de retenue d'entrée ajouté au bit de plus faible poids du résultat complet étant effectivement propagé à travers le pluralité de microprocesseurs en tranche de bits qui forment la seconde pluralité de bits de façon à être ajoutée à la tranche de bits qui est la tranche de bits de plus faible poids de la première pluralité de bits.

9. Système selon la revendication 8, caractérisé en ce que le moyen de traitement a une caractéristique de fonctionnement telle que lorqu'une de ses unités de microprocesseurs en tranche est mise dans une condition de fonctionnement de ET et qu'au moins un des opérandes d'unité de microprocesseurs en tranche est mis à zéro, le bit de retenue d'entrée est effectivement propagé à travers l'unité de microprocesseur en tranche comme son bit de retenue de sortie.

10. Système selon la revendication 9, caractérisé en ce que chaque unité de microprocesseur en tranche est capable d'établir un bit de propagation ou un bit de génération et le moyen pour ajouter le bit de retenue d'entrée, et pour faire que le bit de retenue d'entrée se propage effectivement à travers l'unité de microprocesseur en tranche, qui contient une pluralité de moyens de logique d'anticipation répondant aux unités de microprocesseur en tranche de telle manière que lorsqu'une unité de microprocesseur en tranche établit son bit de propagation mais n'établit pas son bit de génération le moyen de logique d'anticipation associé envoie son bit de retenue d'entrée mais ne génère pas de bit de retenue de sortie.

11. Système selon l'une des revendications 9 et 10, caractérisé en ce que chacune des unités de microprocesseur en tranche qui établit la seconde pluralité de bits est placée dans une condition de

12

fonctionnement de ET et en ce qu'au moins un des opérandes en virgule flottante dans les unités de microprocesseur en tranche est remis à zéro, de sorte que le bit de retenue d'entrée est effectivement envoyé à travers chaque tranche de bit correspondante, le bit de retenue d'entrée étant ajouté au bit de plus faible poids de la première pluralité de bits pour fournir le résultat du calcul en virgule flottante.

12. Système selon l'une quelconque des revendications 8 à 11, caractérisé en ce que les unités de microprocesseur en tranche traitent chacune quatre bits des opérandes en virgule flottante.

13. Système selon l'une quelconque des revendications 8 à 12, caractérisé en ce que le résultat complet de calcul en virgule flottante comprend 64 bits.

14. Système selon la revendication 13, caractérisé en ce que la première pluralité de bits comprend 24 bits et la seconde pluralité de bits comprend 40 bits.

15. Système selon la revendication 13, caractérisé en ce que la première pluralité de bits comprend 56 bits et la seconde pluralité de bits comprend 8 bits.

16. Système selon une quelconque des revendications 7 à 15, caractérisé en ce que le résultat du calcul en virgule flottante est un résultat non arrondi et en ce que les moyens fournissant le bit de retenue d'entrée comprennent un moyen pour fournir un bit d'arrondi comme bit de retenue d'entrée qui est ajouté au bit de plus faible poids du résultat du calcul complet, le bit d'arrondi étant alors ajouté au résultat non arrondi pour fournir un résultat de calcul arrondi en virgule flottante.

17. Système selon l'une quelconque des revendications 7 à 15, caractérisé en ce que le moyen fournissant le bit de retenue d'entrée comprend un moyen qui fait qu'un bit de retenue d'entrée fourni par une source extérieure à l'unité de calcul en virgule flottante comme bit de retenue d'entrée qui est ajouté au bit de plus faible poids du résultat complet du calcul, le bit de retenue d'entrée provenant de l'extérieur étant ainsi ajouté au résultat du calcul en virgule flottante.

FIG. 1

FROM FIG. 1-a

FROM FIG. 1-b

25-31

ROUND LOGIC — RND

ROUND FF

R010
R3110
Q010
Q3110
R1610
Q1610
CRY24

CARRY GENERATE LOGIC

REG SHIFT
R010  Ø-31  R3110
Ø-31

QSHIFT
Q010  Ø-31  Q3110
Ø-31

AREG0-3
BREG0-3

16X32 REG-FILE
A        B
Ø-31    Ø-31

QREG
Ø-31

ALU0
ALU16
CRY0
CRY16
CRY28
OVR0
OVR16

STATUS LATCH

TALU0
TALU16 — SIGN
TCRY0
TCRY16
TCRY28
TOVR0
TOVR16

ARITH — CRY

OVFL

TCRY0
QBIT

LINK
D0
Ø

R        S

ALU EXT LOGIC
UNSIGN
CRYV

CRY01

MUX        MUX
Ø          Ø
R          S

ALU
Ø-31

ALU0-31

CRY31

MUX
TCRYY
MLTC
Ø
1
CARRY
CARRY

TCRYY FF — CRYY
MLTC FF — PMR30
CARRY FF

CARIN MUX
D0
D16
Ø
1
CRY
DECCRY
NVA CRY
TLCH31
SIGN
CARRY

MUX
Y0-31

ZERO DET
Z0
:
Z7

ZLCH
ZERO
:
ZER7

2901-A

X,Y,DS0-31

W LCH        B LCH
Ø-31   31   Ø-30
Ø-31         Ø-31

LA0-31

**FIG. 2**

FIG. 3

**FIG. 4A**

**FIG.4B**

FIG. 5

FIG. 6

FIG. 7

FIG. 8

0 067 667

FIG. 9

FIG. 10

0 067 667

11

**FIG. 11**

FIG. 12

13

FIG. 13

**FIG. 14**

FIG. 15

FIG. 16

FIG. 17

**FIG. 17A**

0 067 667

19

FIG. 18

FIG. 19

**FIG. 20**

FIG. 21

**FIG. 22**

24

**FIG. 23**

FIG. 24

**FIG. 25**

**FIG. 26**

FIG. 27

FIG. 27A

FIG. 28

**FIG. 29**

FIG. 30

FIG. 31

FIG. 32

35

FIG. 33

**FIG. 33A**

FIG. 34

0 067 667

**FIG. 35**

39

FIG. 35A

40

**FIG. 36**

FIG. 36A